Europäisches Patentamt

European Patent Office

Office européen des brevets

(11) Numéro de publication: **0 174 678 B1**

# FASCICULE DE BREVET EUROPEEN

(45) Date de publication du fascicule du brevet:
**22.03.89**

(51) Int. Cl.⁴: **H 04 B 3/23**

(21) Numéro de dépôt: **85201296.2**

(22) Date de dépôt: **09.08.85**

(54) Annuieur d'écho utilisant la modulation delta.

(30) Priorité: **17.08.84 FR 8412916**

(43) Date de publication de la demande:
**19.03.86 Bulletin 86/12**

(45) Mention de la délivrance du brevet:
**22.03.89 Bulletin 89/12**

(84) Etats contractants désignés:
**BE CH DE FR GB IT LI NL SE**

(56) Documents cités:
**EP-A- 0 033 568**
**DE-A- 2 316 699**
**FR-A- 2 153 340**
**US-A- 4 024 358**

(73) Titulaire: **TELECOMMUNICATIONS RADIOELECTRIQUES ET TELEPHONIQUES T.R.T.,
88, rue Brillat Savarin, F-75013 Paris (FR)**

(72) Inventeur: **Ferrieu, Gilbert Marie Marcel, Societe Civile S.P.I.D. 209 rue de l'Université, F-75007 Paris (FR)**

(74) Mandataire: **Chaffraix, Jean et al, Société Civile S.P.I.D. 209, rue de l'Université, F-75007 Paris (FR)**

ACTORUM AG

# Description

L'invention concerne un annuleur d'écho destiné à annuler un signal d'écho engendré dans une voie émission par un signal appliqué à une voie réception, cet annuleur d'écho comprenant un circuit de soustraction recevant sur sa première borne d'entrée un signal déduit du signal entrant dans la voie émission et sur sa deuxième borne d'entrée le signal de sortie d'un filtre transversal recevant un signal déduit du signal appliqué à la voie réception et muni d'un dispositif de réglage de ses coefficients à régler pour annuler la composante due au signal d'écho dans le signal de sortie du circuit de soustraction.

Un signal d'écho peut être produit par exemple par des imperfections d'un circuit de couplage deux fils/quatre fils disposé dans un central téléphonique pour coupler une voie émission et une voie réception formant ensemble un circuit quatre fils à une ligne téléphonique d'abonné. Une autre origine possible de signal d'écho réside dans un couplage acoustique entre le microphone et le haut-parleur d'un poste téléphonique. Quelle que soit son origine, on peut considérer le signal d'écho créé dans la voie émission comme la réponse d'un trajet d'écho au signal transmis par la voie réception. Pour annuler ce signal d'écho parasite qui peut perturber la réception chez un abonné lointain du signal utile transmis par la voie émission, il est connu d'utiliser un filtre transversal connecté à la voie émission et dont les coefficients sont réglés dans un circuit de réglage pour que la réponse du filtre soit aussi voisine que possible de celle du trajet d'écho, de façon que par soustraction du signal de sortie du filtre au signal entrant dans la voie réception, le signal d'écho soit pratiquement annulé à la sortie de la voie réception.

Une limitation de l'emploi des annuleurs d'écho dans les circuits téléphoniques réside dans la complexité des calculs à effectuer. On sait que dans le filtre transversal de l'annuleur d'écho doit être effectuée, à chaque instant d'échantillonnage de son signal d'entrée, une sommation d'un certain nombre d'échantillons de ce signal d'entrée, multipliés préalablement par des coefficients à régler pour être les plus proches possibles d'échantillons de la réponse impulsionnelle du trajet d'écho. Les coefficients du filtre sont réglés généralement suivant l'algorithme du gradient, pour minimiser la valeur quadratique moyenne du signal sortant du circuit de soustraction, ce qui se traduit par un réglage des coefficients par récurrences successives, suivant une formule de récurrence décrite par exemple dans un article de Tanaka et Al intitulé «A Multichannel Echo Canceller System» et paru dans NEC Research and Development, N° 49, Avril 1978, pages 58–64. Suivant cet algorithme, le terme de modification de chaque coefficient à chaque récurrence résulte d'une multiplication d'un échantillon du signal d'erreur constitué par le signal de sortie du circuit de soustraction par l'un des échantillons du signal d'entrée stockés dans le filtre, et d'une division du produit ainsi formé par la somme des carrés d'un certain nombre d'échantillons du signal d'entrée du filtre. Comme les coefficients du filtre doivent être déterminés avec précision, il est clair que les multiplications à réaliser dans le filtre et son circuit de réglage sont des opérations complexes et coûteuses, si le signal appliqué à l'entrée du filtre et provenant de la voie réception est codé en MIC suivant une loi linéaire ou même suivant une loi pseudo-logarithmique (loi A ou loi μ) comme cela est pratiqué jusqu'à présent: voir par exemple à ce sujet l'annuleur d'écho décrit dans le brevet des USA N° 4 064 379, dans lequel le signal analogique transmis par la voie réception est converti en signal MIC pseudo-logarithmique loi A, pour être traité dans l'annuleur d'écho.

La présente invention a pour but de fournir un annuleur d'écho dans lequel les calculs à effectuer dans le filtre transversal et son circuit de réglage sont considérablement simplifiés par rapport à ceux requis dans les annuleurs d'écho connus.

Le document EP-A1-0 033 568 du même demandeur décrit déjà un annuleur d'écho à circuits de calcul simplifiés. Cet annuleur comporte un circuit de transcodage et p filtres numériques adaptifs traitant les signaux $D_1(n)$ à $D_p(n)$ fournis par le circuit de transcodage; cet annuleur est cependent très compliqué et coûteux.

Selon une solution differente de l'art antérieur l'invention propose un annuleur d'écho destiné à annuler un signal d'écho engendré dans une voie émission par un signal appliqué à une voie réception comporte:

– un codeur delta pour coder en delta, à la fréquence d'échantillonnage $1/T$, le signal appliqué à la voie réception et pour fournir à l'entrée du filtre transversal les éléments binaires du signal codé en delta,

– un circuit formeur de différence pour former, à la fréquence d'échantillonnage $1/T$, le signal d'écart entre les valeurs de deux échantillons consécutifs du signal entrant dans la voie émission et pour diriger ce signal d'écart vers la première borne d'entrée du circuit de soustraction,

– enfin, un circuit intégrateur pour intégrer le signal de sortie du circuit de soustraction et pour appliquer le signal intègrè à la borne de sortie de la voie émission.

Le signal de sortie de la voie réception et appliqué au trajet d'écho peut être le signal appliqué à cette voie réception, mais de préférence ce signal de sortie est fourni par le décodeur local présent dans le codeur delta.

Dans ce cas, il est avantageux que le signal sortant de la voie réception soit appliqué à un filtre coupant les fréquences plus élevées que la fréquence supérieure de la bande du signal appliqué à la voie réception.

Les coefficients du filtre transversal peuvent être réglés par récurrences successives suivant l'algorithme du gradient. Dans ce cas, le circuit de réglage des coefficients du filtre transversal est muni de moyens pour régler les coefficients $\hat{h}_i$ par

récurrences successives à la fréquence d'échantillonnage 1/T, selon la formule de récurrence:

$$\hat{h}_i(n+1) = \hat{h}_i(n) + e_n \frac{\Delta F_{n-i}}{p+1}$$

i entier allant de O à p, pT étant la durée de la réponse impulsionnelle du trajet d'écho,

$\hat{h}_i(n)$ étant les coefficients du filtre à modifier à un instant nT,

$\hat{h}_i(n+1)$ étant les coefficients du filtre modifiés et utilisables à l'instant $(n+1)T$,

$e_n$ étant la valeur du signal fourni par le circuit de soustraction à l'instant nT,

$\Delta F_{n-i}$ étant les valeurs des éléments binaires du signal codé en delta, stockés dans le filtre transversal et entrés dans ce filtre aux instants $(n-i)T$.

Si l'on utilise un codeur delta à échelon de codage variable, on peut en tenir compte en insérant à la sortie du filtre transversal un circuit multiplicateur par l'échelon de codage tandis que le circuit de réglage des coefficients du filtre transversal est en outre muni de moyens de multiplication pour multiplier les coefficients formés selon la formule de récurrence précitée, par

$$\left[\frac{\delta f_{n-i+1}}{\delta f_{n-i}}\right] \cdot \left[\frac{\delta f_n}{\delta f_{n+1}}\right],$$

$\delta f_n$, $\delta f_{n+1}$, $\delta f_{n-i}$, $\delta f_{n-i+1}$ étant les valeurs de l'échelon de codage respectivement aux instants nT, $(n+1)T$, $(n-i)T$, $(n-i+1)T$, les coefficients $\hat{h}_i(n+1)$ résultant de cette multiplication étant les coefficients modifiés, utilisables à l'instant $(n+1)T$.

Les coefficients du filtre transversal peuvent être aussi calculés suivant une méthode «statistique». Dans ce cas, le circuit de réglage des coefficients du filtre transversal est muni de moyens pour calculer les coefficients $\hat{h}_i$ du filtre selon l'expression:

$$\hat{h}_i = \frac{1}{q+1} \sum_{j=0}^{q} d_{n-j} \cdot \Delta F_{n-j-i},$$

q étant un nombre entier tel que $q < n$, $d_{n-j}$ étant les valeurs du signal d'écart fourni par le circuit formeur de différence aux instants $(n-j)T$, $\Delta F_{n-j-i}$ étant les valeurs des éléments binaires du signal codé en delta, stockées dans le filtre et entrées dans le filtre aux instants $(n-j-i)T$.

La description suivante, en regard des dessins annexés, le tout donné à titre d'exemple fera bien comprendre comment l'invention peut être réalisée.

La figure 1 est un schéma sommaire de l'annuleur d'écho de l'invention avec un codeur delta à échelon de codage fixe et un circuit de réglage des coefficients par récurrences successives.

Les figures 2 et 3 montrent les modifications à apporter au schéma de la figure 1 pour obtenir deux variantes de l'annuleur d'écho de la figure 1.

La figure 4 représente le schéma d'un mode de réalisation du filtre transversal et du circuit de réglage des coefficients pour l'annuleur d'écho de la figure 1.

La figure 5 représente le schéma sommaire de l'annuleur d'écho de l'invention avec un codeur delta à échelon de codage variable et un circuit de réglage des coefficients par récurrences successives.

La figure 6 représente le schéma d'un mode de réalisation du filtre transversal et du circuit de réglage des coefficients pour l'annuleur d'écho de la figure 5.

La figure 7 représente le schéma de l'annuleur de l'invention avec un codeur delta à échelon de codage fixe et un circuit de réglage des coefficients utilisant un procédé de calcul «statistique».

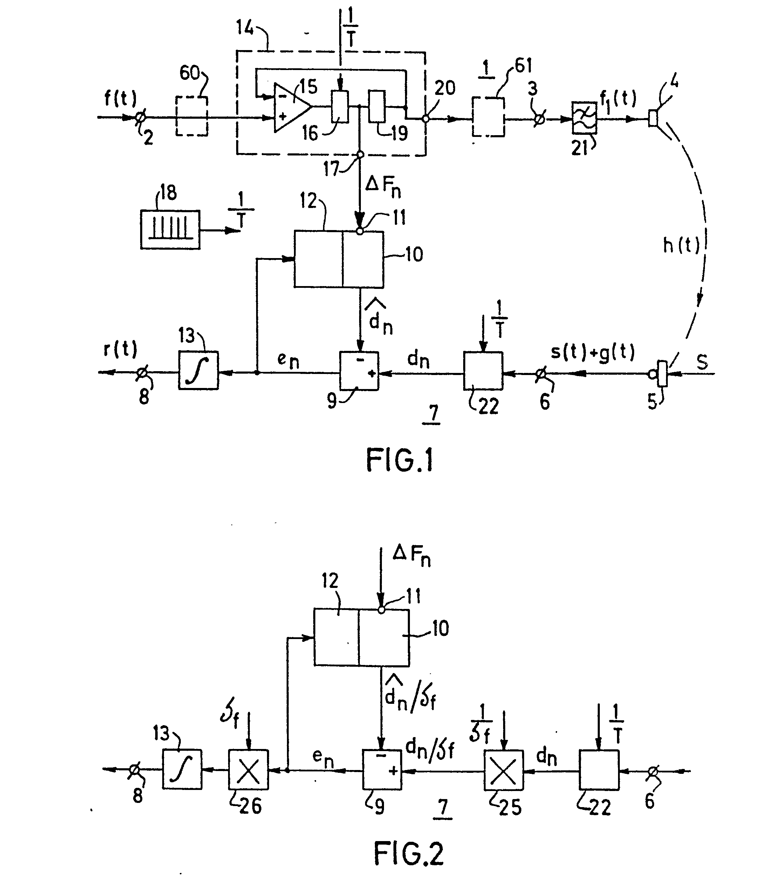

L'annuleur d'écho de l'invention dont la figure 1 représente un schéma sommaire est inséré dans la partie quatre fils d'un circuit téléphonique. Cette partie quatre fils comporte une voie réception 1 dont la borne d'entrée 2 reçoit un signal téléphonique f(t) à transmettre vers le récepteur d'un terminal téléphonique. Dans l'exemple représenté, ce récepteur est le haut-parleur 4 d'un poste téléphonique, directement relié à la borne de sortie 3 de la voie réception. Ce poste téléphonique comporte un microphone 5 faisant office d'émetteur du terminal et produisant en réponse à un signal acoustique de parole S, un signal utile s(t) qui est appliqué à la borne d'entrée 6 de la voie émission 7, pour être transmis vers le récepteur du terminal d'un abonné lointain, via la borne de sortie 8 de la voie émission.

Pour diverses raisons, le signal f(t) appliqué à la voie réception 1 peut produire dans la voie émission 7 un signal d'écho intempestif g(t) par l'intermédiaire d'un trajet d'écho parasite entre la borne de sortie 3 de la voie réception et la borne d'entrée 6 de la voie émission. Dans l'exemple représenté, le signal d'écho est produit par couplage acoustique indésirable entre le haut-parleur 4 et le microphone 5. Un signal d'écho pourrait être produit également au niveau d'un central téléphonique par les imperfections d'un circuit de couplage connecté entre les bornes 3 et 6 pour coupler les voies émission et réception et à la ligne téléphonique d'un abonné. Quelle que soit son origine, le signal d'écho g(t) peut se superposer au signal utile s(t) et perturber la réception de ce signal utile chez l'abonné lointain.

Pour annuler le signal d'écho g(t), un circuit de soustraction 9 est inséré dans la voie émission. La borne positive de ce circuit de soustraction reçoit un signal déduit de celui appliqué à la borne d'entrée 6 de la voie émission. Sa borne négative reçoit le signal de sortie d'un filtre adaptatif 10 dont la borne d'entrée 11 reçoit un signal déduit du signal f(t) appliqué à la voie réception. Les coefficients du filtre adaptatif 10 doivent être réglés de façon que le signal fourni par le filtre sur la borne négative du circuit de soustraction 9 constitue une copie aussi exacte que possible de la composante que procure le signal d'écho g(t) dans le signal appliqué à la borne positive de ce circuit de soustraction. Si les coefficients du filtre adaptatif ont leurs valeurs idéales, le signal d'écho n'intervient plus dans le signal fourni par le circuit de soustraction 9 et après un traitement effectué en 13 et dépendant du traitement effectué dans la voie émission 7 entre la borne 6 et la borne positive du circuit de soustraction 9, on obtient sur la borne de sortie 8 de la voie émission 7, le signal utile à transmettre s(t), débarrassé du signal d'écho g(t). Dans la pratique un écho résiduel r(t) peut subsister sur la borne 8 et la qualité de l'annulation d'écho est déterminée par le rapport r(t)/g(t). Les coefficients du filtre adaptatif 10 sont réglés dans le circuit de réglage 12, à partir du signal de sortie du circuit de soustraction 9. Ce réglage est effectué par récurrences successives suivant l'algorithme du gradient, de façon à minimiser la valeur quadratique moyenne du signal de sortie du circuit de soustraction, ce qui conduit à une formule de récurrence du type indiqué dans l'article de Tanaka précité.

Dans les annuleurs d'écho connus, le filtre adaptatif 10, généralement de type numérique, est agencé pour traiter un signal d'encrée codé en MIC suivant une loi linéaire ou une loi pseudo-logarithmique, ce signal d'entrée pouvant être directement celui transmis par la voie réception ou pouvant résulter d'une conversion analogique/numérique lorsque la voie réception transmet un signal analogique. Pour traiter un tel signal avec des coefficients formés d'un nombre de bits relativement important, les calculs (notamment les multiplications) à effectuer dans le filtre 10 et le circuit de réglage 12 sont complexes et coûteux à réaliser. La présente invention permet de pallier dans une grande mesure ce défaut.

L'annuleur d'écho de l'invention représenté sur la figure 1 comporte un codeur delta 14 pour coder le signal f(t) appliqué à la voie réception. Sous la forme simplifiée représentée, le codeur 14 comporte un circuit comparateur 15 comparant le signal f(t) appliqué sur sa borne positive, au signal décodé localement appliqué sur sa borne négative. Le signal de différence fourni par le comparateur est appliqué au circuit de mise en forme 16 qui fournit à la sortie 17 du codeur les éléments binaires du signal codé en delta, avec une fréquence d'échantillonnage 1/T fournie par un générateur d'horloge 18. Le signal codé est appliqué au décodeur local 19 qui fournit le signal décodé appliqué à la borne négative du comparateur 15 et disponible également à la sortie 20 du codeur 14.

Le signal codé en delta apparaissant à la borne 17 du codeur est appliqué à l'entrée 11 du filtre adaptatif. Ses éléments binaires prennent à un instant quelconque nT (n entier) la valeur $\Delta F_n$ égale à +1 ou −1.

Le signal apparaissant à la borne 20 du codeur résulte d'une intégration dans le décodeur local 19 des éléments binaires $\Delta F_n$, multipliés par un échelon de quantifications $\delta f$. On suppose dans l'annuleur d'écho de la figure 1 que le codeur travaille avec un échelon de quantification $\delta f$ de valeur fixe. Le signal apparaissant à la borne de sortie 20 du codeur «ressemble» au signal f(t) appliqué au codeur, mais il comporte des composantes de bruit en dehors de la bande utile du signal f(t) limitée à la fréquence supérieure $F_0$, fixée habituellement à 3400 Hz. A la sortie 20 du codeur est connecté un filtre passe-bas 21 de fréquence de coupure $F_0$ et on obtient ainsi à la sortie du filtre 21 un signal $f_1(t)$ qui, au rapport signal à bruit du codage en delta près, est égal au signal f(t). Ce signal $f_1(t)$ est utilisé dans le haut-parleur 4 du récepteur du terminal. On peut supposer que le filtre 21 est incorporé dans le trajet d'écho et pour la commodité, on a ainsi disposé sur la figure le filtre 21 après la borne de sortie 3 de la voie réception.

L'annuleur d'écho de l'invention comporte d'autre part dans la voie émission 7 un circuit formeur de différence 22, inséré entre la borne 6 et la borne positive du circuit de soustraction 9. Ce circuit 22 échantillonne à la fréquence 1/T le signal entrant dans la voie émission et forme à chaque instant d'échantillonnage l'écart entre les valeurs de deux échantillons consécutifs de ce signal. On peut maintenant supposer que seul le signal d'écho g(t) est présent dans la voie émission, car comme dans tous les annuleurs d'écho pour circuits téléphoniques la présence du signal utile s(t) superposé au signal d'écho peut poser des problèmes qui sont habituellement résolus à l'aide d'un détecteur de double parole qui stoppe le travail de l'annuleur d'écho quand se trouvent détectés simultanément le signal utile et un signal d'écho. Si l'on appelle ainsi $g_n$ et $g_{n-1}$ la valeur du signal d'écho à l'instant d'échantillonnage nT et à l'instant précédent (n−1)T, le circuit 22 forme à chaque instant nT un signal d'écart $d_n = g_{n-1}$, que l'on peut appeler signal différentiel d'écho.

Le signal $\widehat{d}_n$ fourni par le filtre transversal 10, en réponse au signal codé en delta $\Delta F_n$ peut alors être appelé signal différentiel d'écho estimé et le signal $e_n = d_n - \widehat{d}_n$ fourni par le circuit de soustraction 9 peut être appelé signal différentiel d'écho résiduel. Ce signal $e_n$ est appliqué au circuit de réglage 12 dans lequel il est utilisé pour régler les coefficients du filtre 10 comme on l'expliquera par la suite. Le circuit 13 auquel est appliqué également le signal $e_n$ est un circuit intégrateur qui a une fonction inverse de celle du signal formeur de différence 22 et qui restitue ainsi le signal d'écho résiduel r(t) auquel peut se superposer le signal utile s(t).

On va maintenant expliquer comment l'annuleur de l'invention ainsi constitué permet d'obtenir pratiquement l'annulation du signal $e_n$ à la sortie du circuit de soustraction 9 et donc l'annulation du signal d'écho résiduel r(t).

D'après les explications données plus haut, le signal à la sortie 20 du codeur delta est l'intégrale de la suite:

$$\Delta F_n \cdot \delta f, \ldots, \Delta F_{n+q} \cdot \delta f, \ldots \qquad (1)$$

où $\Delta F_n$, $\Delta F_{n+q}$ ... etc. sont les éléments binaires du signal codé en delta aux instants nT... (n+q)T... (avec q entier positif), et $\delta f$ est l'échelon de codage de valeur fixe.

h(t) étant la réponse impulsionnelle du trajet d'écho comportant tous les éléments connectés entre les bornes 3 et 6, on appelle $h_0, \ldots h_i, \ldots h_p$, les échantillons de cette réponse à la fréquence $1/T$ des éléments binaires du signal codé en delta. Le nombre entier p est défini de telle sorte que $h_{p+q}$ soit nul pour tout q entier positif, ce qui revient à dire que la réponse impulsionnelle h(t) a une durée effective égale à pT.

Dans le cas pratique où travaille l'annuleur d'écho, pour lequel on peut supposer, comme on l'a expliqué, que le signal utile s(t) appliqué à la voie émission est nul, le signal de sortie $d_n$ du circuit formeur de différence 22 est égal au produit de convolution des échantillons de la suite (1) dont l'intégrale est appliquée au trajet d'écho et des échantillons de la réponse impulsionnelle h(t) de ce trajet d'écho, soit:

$$d_n = \Delta F_n \cdot h_0 \cdot \delta f + \ldots + \Delta F_{n-i} \cdot h_i \cdot \delta f + \ldots + \Delta F_{n-p} \cdot h_p \cdot \delta f \qquad (2)$$

En appelant $\hat{h}(t)$ la réponse impulsionnelle du filtre transversal 10 et $\hat{h}_0, \ldots \hat{h}_i, \ldots \hat{h}_p$ les échantillons de cette réponse, généralement appelés coefficients du filtre, le signal $\hat{d}_n$ sortant du filtre peut s'écrire comme le produit de convolution des échantillons du signal codé en delta et de ces coefficients, soit:

$$\hat{d}_n = \Delta F_n \cdot \hat{h}_0 + \ldots + \Delta F_{n-i} \cdot \hat{h}_i + \ldots + \Delta F_{n-p} \cdot \hat{h}_p \qquad (3)$$

Le signal $e_n$ sortant du circuit de soustraction 9 peut alors s'écrire:

$$e_n = d_n - \hat{d}_n = \delta f [\Delta F_n h_0 + \ldots + \Delta F_{n-i} h_i + \ldots + \Delta F_{n-p} h_p]$$

$$- [\Delta F_n \hat{h}_0 + \ldots + \Delta F_{n-i} \hat{h}_i + \ldots + \Delta F_{n-p} \hat{h}_p] \qquad (4)$$

Dans l'annuleur d'écho de l'invention, les coefficients $\hat{h}_i$ du filtre sont réglés dans le circuit le réglage 12, de façon à quasiment annuler le signal $e_n$. L'annulation complète de ce signal $e_n$ est réalisée lorsque les coefficients $\hat{h}_i$ du filtre transversal sont réglés de telle façon que:

$$\hat{h}_i = \delta f \cdot h_i \qquad (5)$$

pour tout i entier tel que $0 \leq i \leq p$.

Le filtre transversal 10 stocke donc, lorsque l'annuleur d'écho a convergé, des coefficients $\hat{h}_i$ égaux aux échantillons $h_i$ de la réponse impulsionnelle du trajet d'écho, multipliés par l'échelon de codage $\delta f$.

On peut noter que ces coefficients $\hat{h}_i$ peuvent être égaux, après la convergence, aux échantillons $h_i$, si, à l'entrée positive du circuit de soustraction 9, on applique le signal $d_n/\delta f$ au lieu du signal $d_n$. Les modifications nécessaires pour réaliser cette variante apparaissent sur la figure 2 qui est une représentation partielle du schéma de la figure 1, les éléments identiques de ces deux figures étant référencés de la même manière. On voit donc sur la figure 2, insérés dans la voie émission 7, un circuit multiplicateur 25 qui multiplie le signal $d_n$ sortant du circuit 22 par $1/\delta f$ pour fournir le signal $d_n/\delta f$ à l'entrée positive du circuit de soustraction 9 et un circuit multiplicateur 26 qui multiplie le signal $e_n$ sortant du circuit de soustraction 9 par $\delta f$ pour fournir le signal $e_n \cdot \delta f$ à l'entrée du circuit intégrateur 13. Le signal $e_n$ est utilisé dans le circuit de réglage 12 pour régler les coefficients $\hat{h}_i$ du filtre transversal 10. Ce dernier fournit un signal de la forme $\hat{d}_n/\delta f$ et à la convergence de l'annuleur d'écho, les coefficients $\hat{h}_i$ du filtre sont tels que:

$$\hat{h}_i = h_i.$$

La mise en cascade des deux circuits multiplicateurs 25 et 26 dans la voie émission, permet de conserver sur la borne de sortie 8 de cette voie le niveau du signal utile appliqué sur la borne d'entrée 6.

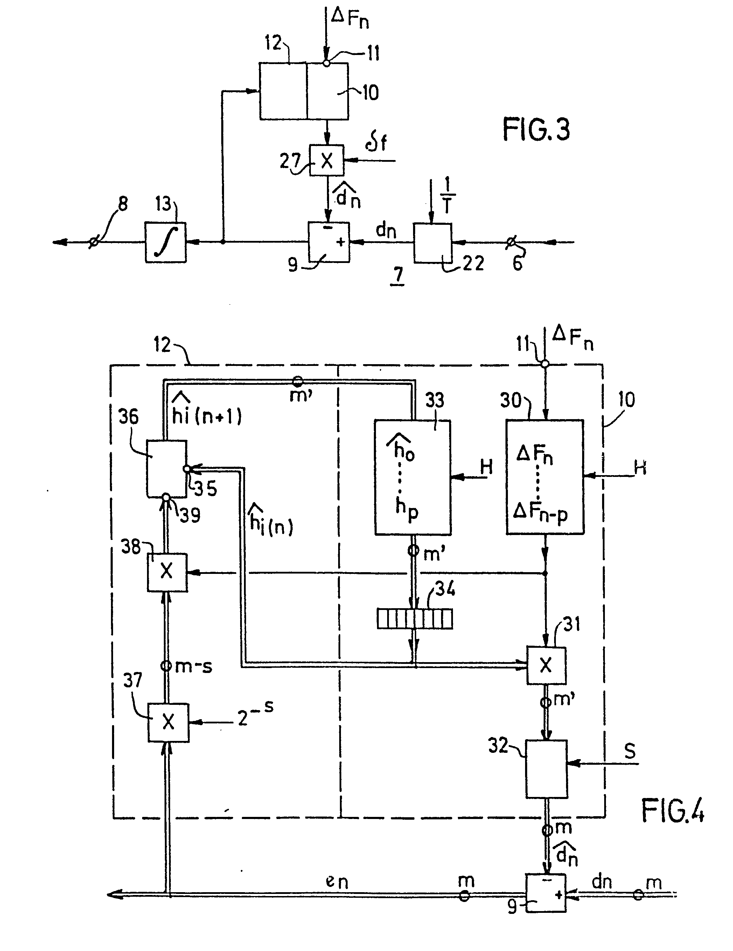

On peut obtenir également des coefficients de filtre $\hat{h}_i$ tels que $\hat{h}_i = h_i$, en insérant, comme le montre la figure 3, un circuit multiplicateur 27 entre la sortie du filtre transversal 10 et l'entrée négative du circuit de soustraction 9, le reste du schéma de la figure 1 étant inchangé. Le circuit 27 multiplie par $\delta f$ le signal $\hat{d}_n/\delta f$ sortant du filtre 10 de façon à fournir le signal $\hat{d}_n$.

Enfin, on peut noter que si dans la voie réception on introduit un circuit multiplicateur par $A_0$, le signal $d_n$ est multiplié par $A_0$ et les coefficients du filtre transversal 10 tendent après la convergence vers les valeurs $\hat{h}_i = A_0 \cdot h_i$ sans perturber le niveau du signal utile s(t) dans la voie émission.

Pour régler les coefficients $\hat{h}_i$ du filtre transversal 10 de façon à annuler le signal différentiel d'écho résiduel $e_n$ fourni par le circuit de soustraction 9, on peut minimiser la valeur quadratique moyenne de ce signal e(n) en utilisant l'algorithme du gradient. Il est bien connu, par exemple de l'article de Tanaka et al précité, que ce procédé procurant une convergence très rapide des coefficients $\hat{h}_i$ consiste à calculer ces coefficients par récurrences successives à la fréquence $1/T$ suivant la formule générale de récurrence:

$$\hat{h}_i(n+1) = \hat{h}_i(n) + e_n \cdot \frac{x_i}{\sum_{i=0}^{p} (x_i)^2} \qquad (6)$$

Cette formule indique le calcul à effectuer pour obtenir la valeur $\hat{h}_i(n+1)$ d'un coefficient $\hat{h}_i$ à un instant $(n+1)T$, à partir de la valeur $\hat{h}_i(n)$ de ce coefficient à l'instant nT. Dans le terme de correction, $e_n$ représente la valeur du signal différentiel d'écho résiduel à l'instant nT, $x_i$ représente la va-

leur d'un échantillon stocké dans le filtre transversal et entré dans le filtre à un instant $(n-i)T$; enfin

$$\sum_{i=0}^{p} (x_i)^2$$ représente la somme des carrés des échantillons entrés dans le filtre pendant la durée $pT$ de la réponse impulsionnelle du trajet d'écho précédant l'instant $nT$.

La formule de récurrence (6) devient très simple à appliquer dans le cas de l'annuleur d'écho de l'invention. En effet, chaque terme $x_i$ n'est autre que l'un des éléments binaires $\Delta F_{n-i}$ du signal codé en delta et de valeur $+1$ ou $-1$.

Le terme $\sum_{i=0}^{p} (x_i)^2$ à pour valeur $p+1$ et la formule de récurrence (6) peut donc s'écrire:

$$\hat{h}_i(n+1) = \hat{h}_i(n) + e_n \cdot \frac{\Delta F_{n-i}}{p+1} \qquad (7)$$

avec $\Delta F_n - i = \pm 1$.

Ainsi, dans l'annuleur d'écho de l'invention, aussi bien les calculs à effectuer dans le filtre transversal 10 pour obtenir le signal d'écart estimé $\hat{d}_n$ (voir formule (3) ci-dessus), que les calculs à effectuer dans le circuit de réglage 12 pour régler les coefficients du filtre (formule (7)), sont très simples à mettre en œuvre du fait que les échantillons $\Delta F_{n-i}$ intervenant comme facteurs de produits dans ces formules ne prennent que des valeurs simples $+1$ ou $-1$. Pratiquement, les calculs à effectuer peuvent se réduire à des additions facilement réalisables dans les techniques analogiques ou numériques.

On va maintenant décrire des modes de réalisation possibles pour les différents éléments de l'annuleur d'écho de la figure 1, dans l'hypothèse préférable d'une réalisation en circuits intégrés où les organes de calcul de l'annuleur d'écho fonctionnent à partir des signaux codés numériquement.

Le codeur delta 14 peut être de n'importe quel type bien connu de l'homme de l'art et fonctionnant avec un échelon de codage fixe, selon l'hypothèse adoptée jusqu'à présent.

Le formeur de différence 22 peut être un codeur MIC différentiel à réponse linéaire également connu de l'homme de l'art. Un tel codeur peut fournie à la fréquence d'échantillonnage $1/T$ un signal $d_n = g_n - g_{n-1}$, codé avec m éléments binaires.

Le circuit de soustraction 9 peut être un additionneur-soustracteur numérique classique à m éléments binaires.

Le circuit intégrateur 13 proprement dit peut être un accumulateur sommateur numérique également bien connu. Pour obtenir sur la borne de sorti 8 de la voie émission un signal analogique, l'accumulateur doit être suivi d'un convertisseur numérique/analogique.

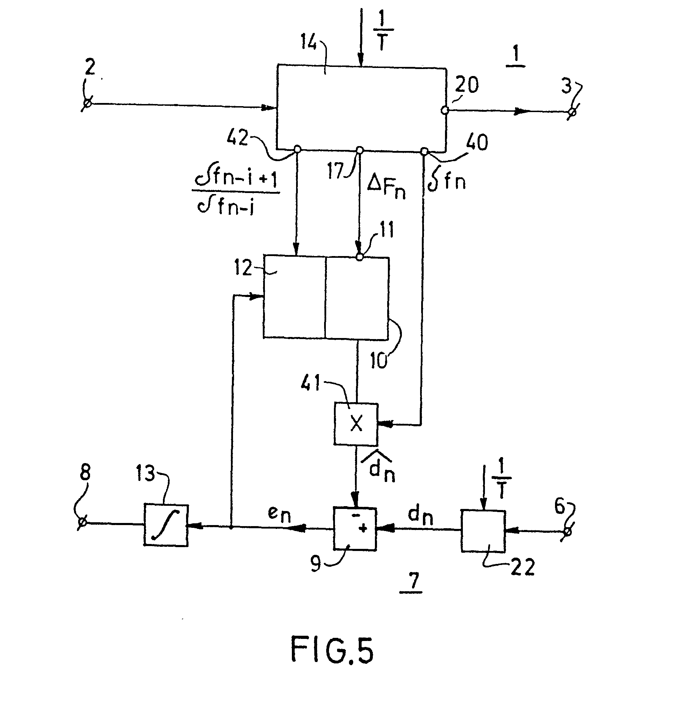

La figure 4 montre un mode de réalisation possible, dans une organisation de type série, pour le filtre transversal 10 et le circuit 12 de réglage des coefficients du filtre. Sur cette figure, les liaisons transportant des signaux à un élément binaire sont représentées par des traits simples et celles transportant des signaux à plusieurs éléments binaires sont représentées par des traits doubles.

Le filtre transversal 10 comporte une mémoire 30 recevant du codeur 14 le signal codé en delta $\Delta F_n$, dont les éléments binaires se produisent à la fréquence $1/T$. Cette mémoire 30 stocke, à chaque instant $nT$, $p+1$ éléments binaires allant de $\Delta F_n$ à $\Delta F_{n-p}$. Sous la commande du signal de commande $H$ de fréquence $(p+1)/T$, ces $p+1$ éléments binaires $\Delta F_n$ à $\Delta F_{n-p}$ apparaissent successivement pendant chaque période d'échantillonnage $T$ à la sortie de la mémoire 30, pour être appliqués à une première entrée du circuit multiplicateur 31. Le filtre transversal 10 comporte également une mémoire 33 pour stocker $p+1$ coefficients $\hat{h}_0$ à $\hat{h}_p$ formés chacun de m' éléments binaires et élaborés dans le circuit de réglage 12, comme on l'expliquera par la suite. Sous la commande du signal de commande $H$ de fréquence $(p+1)/T$, les coefficients $\hat{h}_0$ à $\hat{h}_p$ sont lus dans la mémoire 33 et appliqués, par l'intermédiaire du registre 34 servant de mémoire temporaire, à la deuxième entrée du circuit multiplicateur 31, de façon qu'ils y apparaissent en synchronisme avec les éléments binaires $\Delta F_n$ à $\Delta F_{n-p}$ appliqués à la première entrée de ce circuit multiplicateur. Le circuit multiplicateur 31 est évidemment très simple à réaliser puisqu'il multiplie par $+1$ ou $-1$ les coefficients $\hat{h}_0$ à $\hat{h}_p$.

Pendant chaque période $T$, il apparaît à la sortie du circuit multiplicateur 31, les $p+1$ produits figurant dans le second membre de la formule (3). L'accumulateur 32 commandé par un signal de commande $S$ de fréquence $1/T$, accumule pendant chaque période $T$ les produits formés par le circuit multiplicateur 31 et fournit, conformément à la formule (3), le signal différentiel d'écho estimé $\hat{d}_n$, avec la fréquence d'échantillonnage $1/T$.

Ce signal $\hat{d}_n$ à m éléments binaires est appliqué au circuit de soustraction 9 pour être soustrait du signal différentiel d'écho $d_n$ à m éléments binaires formé dans la voie émission. Le circuit 9 fournit, avec une fréquence d'échantillonnage $1/T$, le signal différentiel d'écho résiduel $e_n$ à m éléments binaires.

Les coefficients de filtre lus dans la mémoire 33 et apparaissant à la sortie du registre 34 sont appliqués dans le circuit de réglage 12 à la borne d'entrée 35 de l'accumulateur 36 qui travaille en répartition dans le temps, pour modifier successivement tous les coefficients $\hat{h}_0$ à $\hat{h}_p$ pendant chaque période $T$, suivant la formule de récurrence (7). Pour le calcul des termes de modification de ces coefficients, on utilise un circuit 37 qui opère la division du signal $e_n$ par $p+1$. Si l'on choisit $p+1 = 2^s$, le circuit 37 est un simple circuit qui décale de s positions binaires les nombres à m éléments binaires formant le signal $e_n$. Le signal $e_n/(p+1)$ à m–s éléments binaires fourni par le circuit 37 est appliqué au circuit multiplicateur 38 pour être multiplié successivement pendant chaque période T par les p+1 éléments binaires $\Delta F_n$ à $\Delta F_{n-p}$ du signal codé en delta apparaissant à la sortie de la mémoire 30. A la sortie du circuit 38 qui est très simple puisqu'il effectue des multiplications par +1 ou −1, il apparaît pendant chaque période T, les p+1 termes de modification des coefficients conformément à la formule (7). Ces termes de modification sont appliqués à la borne d'entrée 39 de l'accumulateur 36 pour être ajoutés aux coefficients apparaissant en synchronisme sur l'autre borne d'entrée 35. Les coefficients modifiés apparaissent à la sortie de l'accumulateur et sont inscrits dans la mémoire 33 pour être utilisés de la même manière, à la période d'échantillonnage T suivante, dans le filtre 10 et dans le circuit de réglage 12.

On rappelle que jusqu'à présent on a supposé fixe, l'échelon de codage $\delta f$ utilisé dans le codeur en delta 14. Or, avec cette technique, on ne peut obtenir un rapport signal à bruit de codage satisfaisant que pour une dynamique limitée du signal $f(t)$ appliqué à l'entrée du codeur, à moins, bien entendu, d'élever de façon considérable la fréquence d'échantillonnage dans le codeur.

Par conséquent, dans l'annuleur d'écho de l'invention, l'utilisation d'un codeur delta 14 avec un échelon de codage fixe et une fréquence d'échantillonnage raisonnable, est pratiquement limitée au cas où la dynamique du signal entrant dans le codeur peut être limitée. C'est ce qui peut être envisagé dans l'utilisation d'un annuleur d'écho représentée sur la figure 1, où le signal $f(t)$ entrant dans la voie réception doit être écouté sur un haut-parleur et où l'annuleur d'écho sert à éviter l'effet du couplage acoustique entre le haut-parleut 4 et le microphone 5. De nombreuses expériences ont montré qu'un grand confort d'écoute pour l'usager est obtenu quand les signaux acoustiques sortant du haut-parleur ont une puissance moyenne constante (réglable par l'utilisateur), quel que soit le niveau du signal $f(t)$ entrant dans la voie réception. On peut utiliser par exemple pour remplir cette fonction de régulation du niveau un dispositif tel que celui décrit dans la demande de brevet français N° 2 479 621 déposée le 28 mars 1980 au nom de la demanderesse et intitulée «Dispositif de régulation automatique du niveau d'écoute d'un poste téléphonique». Ce dispositif permet de conserver aux signaux de parole leur dynamique de variation de niveaux liée à l'élocution tout en annulant pratiquement la dynamique liée aux affaiblissements variables, suivant les liaisons établies, des lignes de transmission. Un dispositif de régulation automatique de niveau de ce genre peut être inséré ainsi sur le schéma de la figure 1 à l'endroit représenté par le rectangle en pointillé 60 pour traiter le signal $f(t)$ entrant dans la voie réception et fournir un signal à dynamique réduite à l'entrée du codeur delta 14. Ce dernier peut être alors réglé pour travailler avec un échelon de codage fixe, optimisé pour procurer le meilleur rapport signal à bruit de codage. Pour l'utilisation de l'annuleur d'écho envisagée sur la figure 1, on peut également insérer après la sortie 20 du codeur 14, à l'endroit représenté par le rectangle en pointillé 61, un amplificateur de gain $A_0$ réglable par l'utilisateur. Comme on l'a déjà expliqué, les coefficients du filtre transversal 10 de l'annuleur de l'écho se régleront alors automatiquement aux valeurs $A_0 \cdot h_i$, tenant compte de l'introduction du gain $A_0$ dans le trajet d'écho.

Hormis les cas du genre de celui que l'on vient d'envisager, il est souvent nécessaire de respecter la dynamique du signal $f(t)$ entrant dans la voie réception. Comme on l'a déjà indiqué, l'utilisation du codeur en delta à échelon de codage fixe ne procure pas un rapport signal à bruit de codage satisfaisant, pour tous les niveaux d'entrée possibles, à moins d'utiliser une fréquence d'échantillonnage très élevée (de l'ordre de plusieurs centaines de kHz), ce qui augmente considérablement à l fois le volume de calculs à effectuer en un temps déterminé dans l'annuleur d'écho et la quantité d'informations à stocker dans la mémoire des coefficients $\hat{h}_i$ et la mémoire des éléments binaires $\Delta F_{n-i}$. Mais il est bien connu que des codeurs delta à compression syllabique, fonctionnant avec un échelon delta variable à un rythme syllabique, permettent d'obtenir un excellent rapport signal à bruit, tout en gardant une fréquence d'échantillonnage relativement faible (de l'ordre de 64 kHz), pour une dynamique de signaux d'entrée de près de 50 dB.

On se place donc maintenant dans le cas où l'on utilise dans l'annuleur d'écho de l'invention, un codeur delta à échelon variable. Dans un cas particulier, celui où la variation syllabique de l'échelon $\delta f$ est négligeable pendant la durée de la réponse impulsionnelle du trajet d'écho et pendant le temps de convergence de l'annuleur d'écho, on peut considérer à tout instant que l'échelon de codage $\delta f$ est constant et utiliser sans autre modification l'annuleur d'écho de la figure 1 avec un codeur à échelon variable. C'est pratiquement le cas lorsque la réponse impulsionnelle du trajet d'écho est très courte (de l'ordre de quelques millisecondes).

Dans le cas général, l'annuleur d'écho de l'invention doit tenir compte des variations de l'échelon de codage $\delta f$ sur la base des considérations qui suivent.

Dans l'annuleur d'écho décrit jusqu'à présent le signal d'écart $d_n$ formé dans la voie émission avait l'expression donnée par la formule (2) avec un échelon $\delta f$ constant.

Avec un codeur à échelon variable, la formule (2) peut s'écrire:

$$d_n = \Delta F_n \cdot h_0 \cdot \delta f_n + \ldots + \Delta F_{n-i} \cdot h_i \cdot \delta f_{n-i} + \ldots + \Delta f_{n-p} \cdot h_p \cdot \delta f_{n-p}$$

où $\delta f_n, \ldots \delta f_{n-i}, \ldots \delta f_{n-p}$ sont les valeurs de l'échelon delta aux instants $nT, \ldots (n-i)T, \ldots (n-p)T$.

On considère maintenant la variante de l'annuleur d'écho de la figure 2 dans laquelle le signal appliqué à la borne positive du circuit de soustraction 9 est $d^1_n = d_n/\delta f_n$, au lieu de $d_n$. Ce signal $d^1_n$ peut s'écrire:

$$d^1_n = \Delta F_n \cdot h_0 \cdot \frac{\delta f_n}{\delta f_n} + \ldots + \Delta F_{n-i} \cdot h_i \cdot \frac{\delta f_{n-i}}{\delta f_n} + \ldots + \Delta F_{n-p} \cdot \frac{\delta f_{n-p}}{\delta f_n} \qquad (8)$$

Comme on l'a expliqué, dans cette variante avec un échelon de codage fixe, les coefficients $\widehat{h}_0, \ldots \widehat{h}_i, \ldots \widehat{h}_p$ du filtre 10 tendent vers les valeurs idéales $h_0, \ldots h_i, \ldots h_p$; autrement dit, en utilisant l'algorithme du gradient consistant pratiquement à régler les coefficients du filtre suivant la formule de récurrence (7), à chaque récurrence le point «cible» de l'algorithme est un point $M_0$ ayant dans un espace de $p+1$ dimensions les coordonnées $h_0, \ldots h_i, \ldots h_p$, et invariable à chaque récurrence.

Il n'en est pas de même, lorsque l'échelon de codage est variable. On déduit en effet de la formule (8), qu'à la récurrence définie par l'instant $nT$, le point «cible» utilisé avec l'algorithme du gradient est un point $M_n$ de coordonnées

$$h_0 \frac{\delta f_n}{\delta f_n}, \ldots h_i \frac{\delta f_{n-i}}{\delta f_n}, \ldots h_p \frac{\delta f_{n-p}}{\delta f_n}$$

Or, en fait, à l'instant suivant $(n+1)T$, on doit avoir:

$$d^1_{n+1} = \Delta F_{n+1} \cdot h_0 \cdot \frac{\delta f_{n+1}}{\delta f_{n+1}} + \ldots + \Delta F_{n-i+1} \cdot h_i \cdot \frac{\delta f_{n-i+1}}{\delta f_{n+1}} + \ldots + \Delta F_{n-p+1} \cdot h_p \cdot \frac{\delta f_{n-p+1}}{\delta f_{n+1}}$$

Si l'on appelle respectivement $X_i(n)$ et $X_i(n+1)$ (avec i variant de 0 à $p+1$), les $p+1$ coordonnées des points «cibles» $M_n$ et $M_{n+1}$, il est facile de voir que l'on passe de $X_i(n)$ à $X_i(n+1)$ par la relation!

$$X_i(n+1) = X_i(n) \cdot \left[ \frac{\delta f_{n-i+1}}{\delta f_{n-i}} \cdot \frac{\delta f_n}{\delta f_{n+1}} \right] \qquad (9)$$

Si donc on utilise dans l'annuleur d'écho un codeur à échelon variable, si l'on forme dans la voie émission le signal $d^1_n = d_n/\delta f_n$, pour former la différence $d^1_n = d^1_n - \widehat{d^1_n}$, $\widehat{d^1_n}$ étant le signal de sortie du filtre transversal, et si enfin les coefficients $\widehat{h'}_i$ du filtre sont réglés suivant l'algorithme du gradient en utilisant la formule de récurrence (7), l'application brutale de cette formule à la récurrence définie par l'instant $nT$ donnera des coefficients modifiés $\widehat{h'}_i(n+1)$ tels que:

$$\widehat{h'}_i(n+1) = \left[ \frac{\delta f_{n-i+1}}{\delta f_{n-i}} \cdot \frac{\delta f_n}{\delta f_{n+1}} \right] \left[ \widehat{h}_i(n) + e^1_n \cdot \frac{\Delta F_{n-i}}{p+1} \right]$$

Un annuleur d'écho utilisant un codeur en delta à échelon variable devra donc comporter pour régler les coefficients suivant la formule de récurrence (12), outre les éléments représentés dans le circuit de réglage 12 de la figure 4, des moyens pour former et stocker les $(p+1)$ derniers facteurs

$$\zeta_i = \left[ \frac{\delta f_{n-i+1}}{\delta f_{n-1}} \cdot \frac{\delta f_n}{\delta f_{n+1}} \right],$$

et des moyens de multiplication par ces facteurs $K_i$.

Ces moyens supplémentaires peuvent être très simplifiés en tenant compte des considérations

$$\widehat{h'}_i(n+1) = \widehat{h}_i(n) + e^1_n \cdot \frac{\Delta F_{n-i}}{p+1} \qquad (10)$$

Ces coefficients $\widehat{h'}_i(n+1)$ devront être corrigés par le facteur

$$\left[ \frac{\delta f_{n-i+1}}{\delta f_{n-i}} \cdot \frac{\delta f_n}{\delta f_{n+1}} \right]$$

utilisé dans la formule (9), pour fournir les «vraies» valeurs $\widehat{h}_i(n+1)$ à utiliser à la récurrence suivante définie par l'instant $(n+1)T$, soit:

$$\widehat{h}_i(n+1) = \widehat{h'}_i(n+1) \cdot \left[ \frac{\delta f_{n-i+1}}{\delta f_{n-i}} \cdot \frac{\delta f_n}{\delta f_{n+1}} \right] \qquad (11)$$

Finalement, la formule de récurrence à utiliser pour obtenir à chaque récurrence les nouvelles valeurs des coefficients s'écrit:

$$(12)$$

qui suivent. On peut remarquer d'abord que le codeur delta à échelon variable à utiliser n'a pas besoin de fournir sur ses bornes de sortie l'information sur la grandeur de l'échelon de codage à chaque instant $nT$, puisque l'information donnant les valeurs $\delta f_n$ de l'échelon de codage est utilisée localement dans l'annuleur d'écho, d'une part pour former le signal $d^1_n = d_n/\delta f_n$, d'autre part pour former les facteurs $K_i$. Ainsi, il est possible de coder en local les valeurs de l'échelon variable $\delta f_n$ utilisées dans le décodeur local 19 du codeur 14 de telle sorte que $\delta f_n$ soit codé en MIC suivant une loi linéaire. On peut aussi coder de façon simple les valeurs des rapports

$$\frac{\delta f_{n-i+1}}{\delta f_{n-i}} \quad \text{et} \quad \frac{\delta f_n}{\delta f_{n+1}}$$

intervenant dans le calcul des facteurs $K_i$, en prenant en compte le fait que ces valeurs sont très voisines de 1 puisque les échelons de codage varient très peu d'un instant d'échantillonnage au suivant.

Le codage de $\dfrac{\delta f_{n-i+1}}{\delta f_{n-i}}$ peut être par exemple tel

que, avec $\varepsilon$ petit par rapport à 1 :

$$-\text{si } 1-\varepsilon \leqslant \frac{\delta f_{n-i+1}}{\delta f_{n-i}} \leqslant 1+\varepsilon \text{ on prendra } \frac{\delta f_{n-i+1}}{\delta f_{n-i}} = 1$$

$$-\text{si } \frac{\delta f_{n-i+1}}{\delta f_{n-i}} < 1-\varepsilon \text{ on prendra } \frac{\delta f_{n-i+1}}{\delta f_{n-i}} = 1-\varepsilon$$

$$-\text{si } \frac{\delta f_{n-i+1}}{\delta f_{n-i}} > 1+\varepsilon \text{ on prendra } \frac{\delta f_{n-i+1}}{\delta f_{n-i}} = 1+\varepsilon$$

Il est clair que ce codage de $\dfrac{\delta f_{n-i+1}}{\delta f_{n-i}}$ définit aussi pour i=0, le codage de $\dfrac{\delta f_n}{\delta f_{n+1}}$.

De préférence, le décodeur local 19 du codeur 14 utilisera les valeurs d'échelon définies par ce mode de codage de $\dfrac{\delta f_{n-i+1}}{\delta f_{n-i}}$, de façon que le signal apparaissant sur la sortie 20 du codeur utilise à tout instant les mêmes échelons delta que ceux intervenant pour le réglage des coefficients $h_i$ du filtre transversal 10.

Avec ce mode de codage, les multiplications par $\dfrac{\delta f_{n-i+1}}{\delta f_{n-i}}$ et $\dfrac{\delta f_n}{\delta f_{n+1}}$ requises dans la formule de récurrence (10) peuvent être très simples à réaliser si l'on choisit $\varepsilon=2^{-x}$, $\varepsilon$ étant petit par rapport à 1, donc x grand. En effet, la multiplication par $1+\varepsilon=1+2^{-x}$ ou par $1-\varepsilon=1-2^{-x}$ peut s'effectuer simplement en additionnant les multiplicandes $\left[\widehat{h}_i(n) + e^1_n \cdot \dfrac{\Delta F_{n-i}}{p+1}\right]$ et lesdits multiplicandes décalés de x éléments binaires vers la droite. Ainsi, le réglage des coefficients selon la formule de récurrence (12) ne requiert que des décalages de x bits et des additions à l'exclusion de toute multiplication complexe.

Le procédé de réglage des coefficients avec un échelon de codage variable vient d'être expliqué dans le cas de la variante de la figure 2 où l'on forme dans la voie émission le signal $d^1_n=d_n/\delta f_n$. Le même procédé est utilisable de la même manière dans le cas de la variante de la figure 3 où le signal sortant du filtre 10 est multiplié à un instant nT par l'échelon de codage $\delta f_n$. En effet comme on l'a expliqué, dans ces deux variantes, les coefficients $h_i$ du filtre convergent vers les mêmes valeurs $\widehat{h}_i$.

de sorte que l'algorithme du gradient utilise les mêmes points «cibles».

La figure 5 montre sommairement les modifications à apporter au schéma de la figure 1 pour constituer un annuleur d'écho avec échelon de codage delta variable. On a représenté seulement les éléments compris entre les bornes 2 et 3 de la voie réception 1 et entre les bornes 6 et 8 de la voie émission 7. Le codeur 14 comporte outre la sortie 17 fournissant les éléments binaires $\Delta F_n$ du signal codé en delta et outre la sortie 20 fournissant le signal décodé localement, une sortie supplémentaire 40 sur laquelle apparaît à chaque instant nT la valeur de l'échelon de codage $\delta f_n$, codé en MIC. Suivant la variante de la figure 3, cette valeur codée $\delta f_n$ est appliquée au circuit multiplicateur 41 pour multiplier par $\delta f_n$ le signal sortant du filtre transversal 10. Le codeur 14 comporte une autre sortie supplémentaire 42 qui procure les varleurs $\dfrac{\delta f_{n-i+1}}{\delta f_{n-i}}$ codées comme on l'a expliqué sous la forme $1 \pm K \cdot 2^{-x}$ avec K=0 ou 1. Les valeurs $\dfrac{\delta f_{n-i+1}}{\delta f_{n-i}}$ ainsi codées sont utilisées dans le circuit de réglage des coefficients 12.

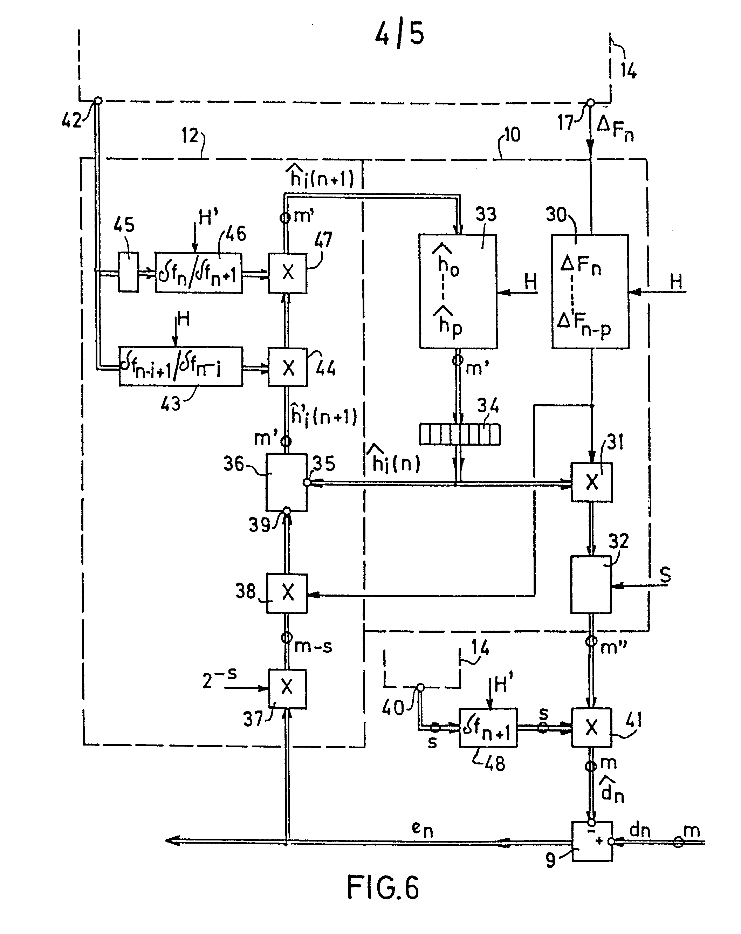

La figure 6 représente un schéma selon le mode de réalisation de la figure 4, du filtre 10 et du circuit de réglage 12 munis des modifications nécessaires dans le cas d'un échelon de codage variable. Les modifications du circuit de réglage 12 portent sur un traitement des coefficients fournis par l'accumulateur 36, avant leur inscription dans la mémoire 33.

L'accumulateur 36 fonctionnant comme on l'a expliqué à propos de la figure 4, reçoit pendant chaque période d'échantillonnage T, à son entrée 35 les p+1 coefficients $\widehat{h}_i(n)$ à modifier et à son entrée 39 les termes de modification correspondants et fournit les coefficients $\widehat{h'}_n(n+1)$ définis par la formule (10). Ces coefficients $\widehat{h'}_i(n+1)$ doivent être corrigés conformément à la formule (11) afin de fournir les «vraies», valeurs $\widehat{h}_i(n+1)$ des coefficients à stocker dans la mémoire 33. Pour cela, le circuit de réglage des coefficients comporte une mémoire 43 dont l'entrée est reliée à la sortie 42 du codeur 14 et qui stocke les (p+1) dernières valeurs de $\dfrac{\delta f_{n-i+1}}{\delta f_{n-i}}$ sous la forme des nombres égaux à $1+K \cdot 2^{-x}$ avec K= $-1$, 0, $+1$. Ces p+1 nombres sont lus pendant une période d'échantillonnage T à l'aide du signal de commande H de fréquence (p+1)/T pour être appliqués à une entrée du circuit multiplicateur 44 dont l'autre entrée reçoit les coefficients $\widehat{h'}(n+1)$ sortant de l'accumulateur 36. D'autre part, la sortie 42 du codeur 14 qui fournit à l'instant (n+1)T la valeur codée de $\dfrac{\delta f_{n+1}}{\delta f_n}$ est reliée au circuit 45 qui fournit la valeur codée de $\dfrac{\delta f_n}{\delta f_{n+1}}$ stockée

dans la mémoire 46 sous la forme d'un nombre égal à $1+K'\cdot 2^{-x}$ avec $K' = -1, 0, +1$. Cette mémoire est lue par un signal de commande H' de fréquence $\dfrac{1}{T}$ pour que la valeur codée de $\dfrac{\delta f_n}{\delta f_{n+1}}$

apparaisse pendant toute la durée d'une période d'échantillonnage T à une entrée du circuit multiplicateur 47 dont l'autre entrée est reliée à la sortie du circuit multiplicateur 44. Le circuit multiplicateur 47 fournit ainsi les coefficients de filtre $\hat{h}_i(n+1)$ corrigés conformément à la formule (11) et à stocker dans la mémoire 33. Comme on l'a expliqué, les multiplications dans le circuit 44 et 47 sont très simples à réaliser avec le type de codage utilisé.

Une autre modification à effectuer porte sur une multiplication du signal sortant de l'accumulateur 32 et constituant le signal de sortie du filtre transversal 10 par le signal d'échelon variable. Pour cela, le signal d'échelon variable $\delta f_n$ disponible à la sortie 40 du codeur 14 sous la forme d'un nombre à s bits est inscrit dans la mémoire 48. Il est lu dans cette mémoire à l'aide du signal de commande H' de fréquence 1/T et reste appliqué sans changement à une entrée du circuit multiplicateur 41 pendant une période d'échantillonnage T. Pour la cohérence avec les explications données pour le circuit de réglage 12, c'est l'échelon $\delta f_{n+1}$ qui est appliqué au circuit multiplicateur 41. A l'autre entrée de ce circuit 41 est appliqué le signal à m'' bits fourni par l'accumulateur 32. Le signal de produit fourni par le circuit multiplicateur 41 est arrondi à m bits pour former le signal différentiel d'écho estimé $\hat{d}_n$ appliqué à la borne négative du circuit de soustraction 9.

Une autre méthode dite «statistique», différente de celle utilisant l'algorithme du gradient permet de calculer directement les coefficients du filtre transversal 10, sans procéder par récurrences successives comme on l'a expliqué jusqu'à présent. Cette méthode généralement moins précise, mais plus rapide peut fournir des valeurs de coefficients approchées qui peuvent servir par exemple de valeurs de coefficients initiales pour un annuleur d'écho plus précis travaillant par récurrences successives.

On va d'abord expliquer les bases théoriques de cette méthode dans le cas de l'annuleur d'écho de l'invention avec un échelon de codage $\delta f$ constant.

Dans le mode de réalisation de la figure 1, la méthode a pour but, suivant les notations déjà utilisées, de calculer les coefficients $\hat{h}_0, \hat{h}_1 \ldots \hat{h}_p$ du filtre, comme des valeurs approchées de $h_0 \cdot \delta f$, $h_1 \cdot \delta f, \ldots h_p \cdot \delta f$.

On peut exprimer de façon semblable à la formule (2) les écarts $d_n, d_{n-1}, \ldots d_{n-q}$ entre deux échantillons successifs du signal d'écho, à $(q+1)$ instants d'échantillonnage successifs: $nT$, $(n-1)T, \ldots (n-q)T$, avec $q < p$. On obtient:

$$\begin{cases} d_n = \Delta F_n(h_0\delta f) + \Delta F_{n-1}(h_1\cdot\delta f) + \ldots + \Delta F_{n-p}(h_p\cdot\delta f) \\ d_{n-1} = \Delta F_{n-1}(h_0\cdot\delta f) + \Delta F_{n-2}(h_1\cdot\delta f) + \ldots + \Delta F_{n-p-1}(h_p\cdot\delta f) \\ \cdot \\ \cdot \\ \cdot \\ d_{n-q} = \Delta F_{n-q}(h_0\cdot\delta f) + \Delta F_{n-q-1}(h_1\cdot\delta f) + \ldots + \Delta F_{n-p-q}(h_p\cdot\delta f) \end{cases} \qquad (13)$$

Si l'on multiplie les deux membres des $(q+1)$ équations (13), respectivement par $\Delta F_n$, $\Delta F_{n-1}$ $\ldots \Delta F_{n-q}$ et si l'on fait la somme membre à membre de ces équations, il est aisé de voir que l'on obtient en utilisant la variable j, nombre entier variant de 0 à q:

$$\left. \begin{aligned} \sum_{j=0}^{q} d_{n-j}\cdot\Delta F_{n-j} &= (h_0\cdot\delta f)\sum_{j=0}^{q} |\Delta F_{n-j}|^2 \\ &+ (h_1\cdot\delta f)\sum_{j=0}^{q} \Delta F_{n-j}\cdot\Delta F_{n-j-1} \\ &+ (h_p\cdot\delta f)\sum_{j=0}^{q} \Delta F_{n-j}\cdot\Delta F_{n-j-p} \end{aligned} \right\} \qquad (14)$$

Au sujet du second membre de cette équation (14), on peut faire les observations suivantes:

Les termes $\Delta F_{n-j}$ ayant les valeurs $+1$ ou $-1$, on a $|\Delta F_{n-j}|^2 = 1$ et ainsi le facteur du terme $(h_0\cdot\delta f)$ est égal à $q+1$.

Les facteurs des autres termes $(h_1\cdot\delta f) \ldots (h_p\cdot\delta f)$ peuvent s'écrire d'une manière générale pour un

terme quelconque $(h_k\cdot\delta f)$ avec k entier allant de 1 à p:

$$C^0_k = \sum_{j=0}^{q} \Delta F_{n-j}\cdot\Delta F_{n-j-k} \qquad (15)$$

Cette expression représente la fonction de corrélation, calculée sur $q+1$ échantillons, de deux suites d'échantillons du signal codé en delta décalées de $k$ périodes d'échantillonnage. Une caractéristique du codage en delta est que, pour la plupart des décalages tels que $k > 4$, la fonction de corrélation $C^0_k$ est quasiment nulle tandis que pour les décalages les plus faibles ($k \leqslant 4$), $C^0_k$ a une valeur différente de zéro.

Si l'on suppose néanmoins que $C^0_k = 0$ pour toutes valeurs de $k$ allant de 1 à p, l'équation (14) peut se réduire à:

$$(h_0 \delta f) = \frac{1}{q+1} \sum_{j=0}^{q} d_{n-j} \cdot \Delta F_{n-j} \qquad (16)$$

Par un procédé analogue à celui qui a permis d'établir cette relation (16), on peut calculer les autres termes $(h_1 \cdot \delta f) \ldots (h_p \cdot \delta f)$. Le terme général $(h_i \cdot \delta f)$ ($i$ entier allant de 0 à p) peut se mettre sous la forme:

$$(h_i \cdot \delta f) = \frac{1}{q+1} \sum_{j=0}^{q} d_{n-j} \cdot \Delta F_{n-j-i} \qquad (17)$$

si l'on suppose que la fonction de corrélation

$$C^i_k = \sum_{j=0}^{q} \Delta F_{n-j} \cdot \Delta F_{n-j-i-k} \qquad (18)$$

est nulle pour toutes valeurs de $k$ entier, différent de $i$ et allant de 0 à p.

Dans la méthode «statistique» qui peut être mise en œuvre pour déterminer les coefficients du filtre transversal de l'annuleur d'écho, on suppose cette hypothèse vérifiée. Cette méthode consiste à calculer ces $(p+1)$ coefficients $\widehat{h}_i$ comme le second membre de la formule (17) dans lequel on fait varier $i$ entier de 0 à p, ces coefficients calculés étant des valeurs approchées des termes $(h_i \cdot \delta f)$, dans lesquels $h_i$ représente les échantillons de réponse impulsionnelle du trajet d'écho.

Ainsi, dans l'annuleur d'écho de l'invention utilisant cette méthode, le circuit de réglage 12 des coefficients doit être agencé pour former, à partir des échantillons $d_{n-j}$ du signal différentiel d'écho et des échantillons $\Delta F_{n-i-j}$ du signal codé en delta, les produits de convolution $z_i$ tels que:

$$z_i = \sum_{j=0}^{q} d_{n-j} \cdot \Delta F_{n-i-j} \qquad (19)$$

les coefficients $\widehat{h}_i$ du filtre transversal sont déterminés par le calcul:

$$\widehat{h}_i = z_i / (q+1) \qquad (20)$$

A partir des coefficients de filtre $\widehat{h}_i$ ainsi calculés, le signal de sortie du filtre 10, $\widehat{d}_n$ peut être calculé suivant la formule (3) qui peut s'écrire:

$$\widehat{d}_n = \sum_{i=0}^{q} \Delta F_{n-i} \cdot \widehat{h}_i \qquad (21)$$

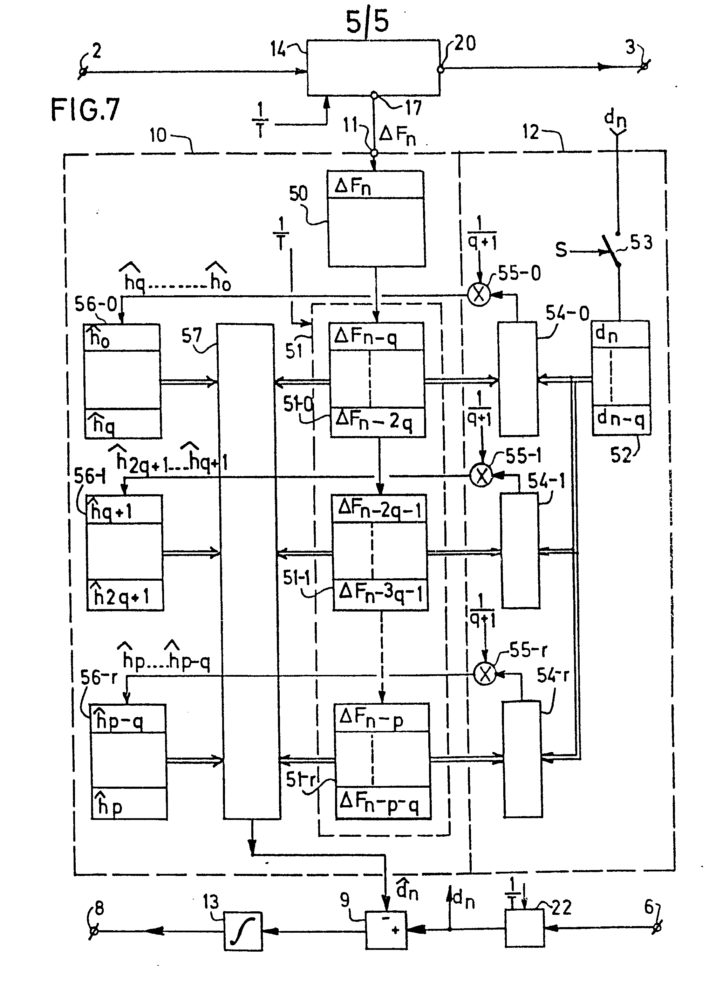

La figure 7 représente un mode de réalisation d'un annuleur d'écho mettant en œuvre la méthode que l'on vient de décrire. Comme dans l'annuleur d'écho de la figure 1, le codeur delta 14 code en delta le signal $f(t)$ appliqué à la voie émission 1 et fournit sur sa sortie 17 les échantillons $\Delta F_n$ du signal codé en delta qui sont appliqués à l'entrée 11 du filtre transversal 10 et sur sa sortie 20 le signal décodé localement, c'est-à-dire résultant de l'intégration de la suite des échantillons $\Delta F_n \cdot \delta f$. Dans la voie émission 7, le circuit formeur de différence 22 fournit le signal différentiel d'écho $d_n = g_n - g_{n-1}$ qui est appliqué à la borne positive de soustraction 9. Le signal différentiel d'écho estimé $\widehat{d}_n$ fourni par le filtre transversal 10 est appliqué à la borne négative du circuit de soustraction qui fournit le signal $e_n = d_n - \widehat{d}_n$. Dans la méthode «statistique» mise en œuvre dans l'annuleur d'écho de la figure 7, c'est le signal différentiel d'écho $d_n$ qui est utilisé dans le circuit de réglage 12 pour régler les coefficients $\widehat{h}_i$ du filtre, comme cela résulte des formules (19) et (20).

Dans le mode de réalisation représenté, le filtre transversal 10 comporte un circuit de retard 50 recevant le signal codé en delta $\Delta F_n$ et produisant un retard $qT$. La mémoire 51 du filtre organisée comme un registre à décalage décalé à la fréquence $1/T$ peut stocker $p+1$ échantillons consécutifs du signal sortant du circuit de retard 50. $pT$ étant égal à la durée de la réponse impulsionnelle du trajet d'écho, on peut choisir $q$ de telle sorte que $(p+1) = (r+1)(q+1)$, $r$ étant un nombre entier. Le registre à décalage formant la mémoire 51 est alors formé de $r+1$ registres à décalage élémentaires en cascade 51-0 à 51-r comportant chacun $q+1$ éléments. On a indiqué dans ces registres les échantillons qui y sont présents à l'instant $nT$ où l'échantillon $\Delta F_n$ est introduit à l'entrée du circuit de retard 50: le premier registre 51-0 contient les échantillons antérieurs $\Delta F_{n-q}$ à $\Delta F_{n-2q}$; le deuxième registre 51-1 contient les échantillons antérieurs $\Delta F_{n-2q-1}$ à $\Delta F_{n-3q-1}$; enfin le dernier registre 51-r contient les échantillons antérieurs $\Delta F_{n-(r+1)q-r}$ à $\Delta F_{n-(r+2)q-r}$.

Pour calculer les coefficients $\widehat{h}_i$ du filtre en utilisant les formules (19) et (20), le circuit de réglage des coefficients 12 comporte une mémoire 52 pour stocker $q+1$ échantillons consécutifs du signal $d_n$ fourni par le circuit 22. Par l'intermédiaire d'un circuit interrupteur 53 commandé par un signal de commande S pour être fermé jusqu'à l'instant $nT$ et pour être ensuite ouvert pendant l'intervalle de temps $qT$ suivant, la mémoire 52 reste remplie de l'instant $nT$ à l'instant $(n+q)T$ par les mêmes échantillons $d_n$ à $d_{n-q}$ comme l'indique la figure.

Les termes $z_i$ selon la formule (19) sont calculés suivants une certaine répartition dans le temps, pendant une période de calcul s'étendant de l'instant $nT$ à l'instant $(n+q)T$. On utilise pour ce calcul $r+1$ organes de calcul 54-0 à 54-r qui sont organisés chacun, de façon connue en soi, pour calculer à chaque instant d'échantillonnage de la période de calcul l'un des termes $z_i$ conformément à la formule (19). Ces organes de calcul sont connectés d'une part à la mémoire 52 pour recevoir pendant la période de calcul les mêmes échantillons $d_n$ à $d_{n-q}$. Les organes de calcul 54-0 à 54-r sont connectés d'autre part, respectivement aux registres à décalage 51-0 à 51-r pour recevoir les échantillons présents dans ces registres qui sont décalés à la fréquence $1/T$. Ces liaisons aux organes de calcul 54-0 à 54-r sont représentées en traits doubles, pour indiquer qu'elles transportent chacune $(q+1)$ échantillons.

A l'instant $nT$, premier instant de la période de calcul, il est aisé de voir, à partir des échantillons indiqués dans les registres que les organes de calcul 54-0 à 54-r fournissent respectivement les termes $z_q$ à $z_{(r+1)q+r}$ soit $z_q$ à $z_p$.

A l'instant suivant $(n+1)T$, les échantillons présents dans les registres ayant été décalés d'un élément, les organes de calcul 54-0 à 54-r fournissent respectivement les termes $z_{q-1}$ à $z_{p-1}$.

Le processus se poursuit jusqu'au dernier instant d'échantillonnage de la période ce calcul, $(n+q)T$. A cet instant, les échantillons présents dans les registres ayant été décalés de $q$ éléments, les organes de calcul 54-0 à 54-r fournissent respectivement les termes $z_0$ à $z_{p-q}$. Ainsi, pendant toute la période de calcul, les organes de calcul 54-0 à 54-r ont fourni ensemble les $p+1$ termes $z_i$ allant de $z_0$ à $z_p$.

Pour former les coefficients désirés $\hat{h}_i$ suivant la formule (20), les sorties des organes de calcul 54-0 à 54-r sont munis de circuits multiplicateurs 55-0 à 55-r pour multiplier les termes $z_i$ par $1/(q+1)$, ce qui correspond à un simple décalage d'éléments binaires si $(q+1)$ est une puissance de deux.

Les coefficients $\hat{h}_q$...$\hat{h}_0$ fournis successivement par le circuit multiplicateur 55-0 au cours de la période de calcul sont stockés dans la mémoire de coefficients 56-0 du filtre 10. Les coefficients $\hat{h}_{2q+1}$...$\hat{h}_{q+1}$ fournis successivement par le circuit multiplicateur 55-1 sont stockés dans la mémoire de coefficients 56-1. Enfin les coefficients $\hat{h}_p$...$\hat{h}_{p-q}$ fournis successivement par le circuit multiplicateur 55-r sont stockés dans la mémoire de coefficients 56-r.

A la fin de la période de calcul, soit à l'instant $(n+q)T$ se trouvent donc présentés dans l'ensemble des mémoires 56-0 à 56-r tous les coefficients $\hat{h}_i$ calculés. A partir de l'instant d'échantillonnage suivant $(n+q+1)T$ peut commencer le calcul des échantillons du signal résiduel d'écho estimé $\hat{d}_n$ à partir de ces coefficients calculés $\hat{h}_i$ et des échantillons du signal $\Delta F_n$ présents dans les registres à décalage 51-0 à 51-r. Pour effectuer ce calcul, on utilise un organe de calcul 57 qui est connecté par des liaisons multiples représentées en traits doubles aux registres 51-0 à 51-r et aux mémoires 56-0 à 56-r et qui est agencé de façon connue en soi pour former selon la formule (21) les échantillons du signal $\hat{d}_n$, constituant le signal de sortie du filtre 10.

On pourrait aussi utiliser les coefficients $\hat{h}_i$ calculés comme coefficients initiaux dans un annuleur d'écho dans lequel les coefficients sont réglés par récurrences successives, par exemple dans l'annuleur d'écho que l'on a décrit à l'aide de la figure 1. La valeur idéale des coefficients de cet annuleur d'écho a, comme celle des coefficients calculés $\hat{h}_i$, la forme $h_i \cdot \delta f$, $h_i$ représentant la réponse impulsionnelle du trajet d'écho et $\delta f$ l'échelon de codage. Si l'annuleur d'écho travaillant par récurrences successives requiert des coefficients dont la valeur idéale est $h_i$, les coefficients calculés seront divisés par l'échelon de codage $\delta f$.

Le calcul des coefficients par la méthode «statistique» tel que l'on vient de le décrire peut être appliqué aux cas où l'on peut utiliser un codeur delta avec un échelon de codage $\delta f$ fixe, c'est-à-dire, par exemple comme on l'a envisagé plus haut, quand on peut limiter la dynamique du signal appliqué du codeur.

Dans le cas où le codeur delta utilise un échelon de codage variable, les formules (13) ayant servi de base à l'explication de la méthode «statistique» peuvent s'écrire comme suit, en appelant $\delta f_n$, $\delta f_{n-1}$, ... $\delta f_{n-p}$ les valeurs de l'échelon de codage aux instants $nT$, $(n-1)T$...$(n-p)T$:

$$\begin{cases} d_n = \Delta F_n(h_0 \cdot \delta f_n) + \Delta F_{n-1}(h_1 \cdot \delta f_{n-1}) + \ldots + \Delta F_{n-p}(h_p \cdot \delta f_{n-p}) \\ d_{n-1} = \Delta F_{n-1}(h_0 \cdot \delta f_{n-1}) + \Delta F_{n-2}(h_1 \cdot \delta f_{n-2}) + \ldots + \Delta F_{n-p-1}(h_p \cdot \delta f_{n-p-1}) \\ \quad \cdot \\ \quad \cdot \\ \quad \cdot \\ d_{n-q} = \Delta F_{n-q}(h_0 \cdot \delta f_{n-q}) + \Delta F_{n-q-1}(h_1 \cdot \delta f_{n-q-1}) + \ldots + \Delta F_{n-p-q}(h_p \cdot \delta f_{n-p-q}). \end{cases} \qquad (22)$$

On se place maintenant dans le cas pratique où l'échelon de codage varie à un rythme syllabique. On peut alors choisir $q$ de telle sorte que pendant un intervalle de temps $qT$ l'échelon de codage peut être valablement considéré comme fixe. On peut alors poser:

$$\begin{cases} \delta f_n = \delta f_{n-1} = \dots \delta f_{n-q} \\ \delta f_{n-1} = \delta f_{n-2} = \dots \delta f_{n-q-1} \\ \cdot \\ \cdot \\ \cdot \\ \delta f_{n-p} = \delta f_{n-p-1} = \dots \delta f_{n-p-q} \end{cases} \quad (23)$$

Les formules (22) peuvent alors s'écrire:

$$\begin{cases} d_n = \Delta F_n(h_0 \cdot \delta f_n) + \Delta F_{n-1}(h_1 \cdot \delta f_{n-1}) + \dots + \Delta F_{n-p}(h_p \cdot \delta f_{n-p}) \\ d_{n-1} = \Delta F_{n-1}(h_0 \cdot \delta f_n) + \Delta F_{n-2}(h_1 \cdot \delta f_{n-1}) + \dots + \Delta F_{n-p-1}(h_p \cdot \delta f_{n-p}) \\ \cdot \\ \cdot \\ \cdot \\ d_{n-q} = \Delta F_{n-q}(h_0 \cdot \delta f_n) + \Delta F_{n-q-1}(h_1 \cdot \delta f_{n-1}) + \dots + \Delta F_{n-q-p}(h_p \cdot \delta f_{n-p}) \end{cases} \quad (24)$$

En supposant que la fonction de corrélation $C^i_k$ donnée par la formule (18) est nulle, on peut montrer que le terme général $h_i \cdot f_{n-i}$ (i allant de 0 à p) peut se mettre sous la forme suivante, à comparer à la formule (17):

$$h_i \cdot f_{n-i} = \frac{1}{q+1} \sum_{j=0}^{q} d_{n-j} \cdot \Delta F_{n-j-i} \quad (25)$$

Deux cas peuvent se présenter:

– dans un cas la durée $pT$ de la réponse impulsionnelle du trajet d'écho est inférieure ou égale à la durée $qT$ pendant laquelle on peut valablement considérer comme fixe l'échelon de codage. On peut alors écrire $\delta f_{n-i} = \delta f$ quel que soit i allant de 0 à p et l'on est ramené au cas déjà envisagé. En calculant les coefficients $\hat{h}_i$ du filtre transversal selon les formules (19) et (20) on obtient des coefficients dont la valeur idéale $h_i \cdot \delta f$ ne dépend pas des variations de l'échelon de codage pendant la durée $pT$.

– dans l'autre cas, on a $pT > qT$ et les coefficients du filtre transversal calculés selon les formules (19) et (20) ont une valeur idéale $h_i \cdot \delta f_{n-i}$ dépendant des variations de l'échelon de codage $\delta f_{n-i}$ pendant la durée $pT$ de la réponse impulsionnelle du trajet d'écho. Si l'on appelle $\hat{h}_i$ les coefficients calculés à l'aide des formules (19) et (20), on peut corriger ces coefficients $\hat{h}_i$ pour obtenir les «vrais» coefficients $h''_i$ en effectuant l'opération:

$$\hat{h}_i = \hat{h}_i \cdot \frac{\delta f_n}{\delta f_{n-i}}$$

Dans les deux cas envisagés ci-dessus, on peut utiliser le filtre transversal 10 et le circuit de réglage 12 décrits à la figure 7. Dans le cas où l'on désire corriger les coefficients calculés en tenant compte des variations de l'échelon de codage, le codeur 14 doit comporter une sortie supplémentaire fournissant les $p+1$ rapports $\dfrac{\delta f_n}{\delta f_{n-i}}$, tandis que le circuit de réglage 12 doit comporter une mémoire supplémentaire pour stocker ces rapports et des moyens de multiplication supplémentaires pour multiplier les coefficients calculés $\hat{h}_i$ par les rapports correspondants $\dfrac{\delta f_n}{\delta f_{n-i}}$.

Dans toute la description de l'annuleur d'écho de l'invention, on a utilisé comme signal sortant de la voie réception et engendrant un écho dans la voie émission, un signal obtenu par décodage du signal codé en delta et existant forcément dans n'importe quel codeur delta. Mais il est clair que l'on pourrait utiliser aussi le signal $f(t)$ lui-même entrant dans la voie émission, dont le signal obtenu par décodage du signal codé en delta n'est qu'une image. Toutefois, si l'on opère de cette manière, la qualité de l'annulation d'écho se trouve un peu dégradée, car les signaux appliqués à l'entrée du trajet d'écho et à l'entrée du trajet d'écho simulé que constitue le filtre transversal n'ont pas subi un traitement commun, comme dans l'autre manière d'opérer, ce qui fait que le bruit de codage en delta du signal $f(t)$ par le codeur 14 se retrouve ajouté au signal différentiel d'écho résiduel $e_n = d_n - \hat{d}_n$; ce bruit de codage dû au codeur delta peut ne pas être négligeable devant le signal différentiel d'écho résiduel $e_n = d_n - \hat{d}_n$ recherché.

## Revendications

1. Annuleur d'écho destiné à annuler un signal d'écho engendré dans une voie émission (7) par un signal appliqué à une voie réception (1), cet annuleur d'écho comprenant un circuit de soustraction (9) recevant sur sa première borne d'entrée un signal déduit du signal entrant dans la voie émission (7) et sur sa deuxième borne d'entrée le signal de sortie d'un filtre transversal (10) recevant un signal déduit du signal appliqué à la voie réception (1) et muni d'un dispositif de réglage (12) de ses coefficients à régler pour annuler la composante due au signal d'écho dans le signal de sortie du circuit de soustraction (9), caractérisé en ce qu'il comporte:

– un codeur delta (14) pour coder en delta, à la fréquence d'échantillonnage $1/T$, le signal appliqué à la voie réception (1) et pour fournir à l'entrée du filtre transversal (10) les éléments binaires du signal codé en delta.

— un circuit formeur de différence (22) pour former, à la fréquence d'échantillonnage $1/T$ le signal d'écart entre les valeurs de deux échantillons consécutifs du signal entrant dans la voie émission (7) et pour diriger ce signal d'écart vers la première borne d'entrée du circuit de soustraction (9).

— enfin, un circuit intégrateur (13) pour intégrer le signal de sortie du circuit de soustraction (9) et pour appliquer le signal intégré à la borne (8) de sortie de la voie émission (7).

2. Annuleur d'écho selon la revendication 1, caractérisé en ce que le signal sortant de la voie réception (1) est formé par décodage du signal codé en delta.

3. Annuleur d'écho selon la revendication 2, caractérisé en ce que le signal sortant de la voie réception est fourni par le décodeur local (19) présent dans le codeur delta (14).

4. Annuleur d'écho selon l'une des revendications 2 et 3, caractérisé en ce que le signal sortant de la voie réception (1) est appliqué à un filtre (21), coupant les fréquences plus élevées que la fréquence supérieure de la bande du signal appliqué à la voie réception.

5. Annuleur d'écho selon l'une des revendication 1 à 4, caractérisé en ce qu'il comporte un circuit pour diviser par l'échelon de codage (25) utilisé dans le codeur delta le signal d'écart fourni par le circuit formeur de différence (22) et pour appliquer le signal divisé à la première borne d'entrée du circuit de soustraction (9) et un circuit (26) pour multiplier par ledit échelon de codage le signal sortant du circuit de soustraction et pour appliquer le signal multiplié à l'entrée dudit circuit intégrateur (13).

6. Annuleur d'écho selon l'une des revendications 1 à 4, caractérisé en ce qu'il comporte un circuit (27) pour multiplier par l'échelon de codage utilisé dans le codeur le signal sortant du filtre transversal et pour appliquer le signal multiplié à la deuxième borne d'entrée du circuit de soustraction (9).

7. Annuleur d'écho selon l'une des revendications 1 à 6, caractérisé en ce que le circuit de réglage (12) des coefficients du filtre transversal est muni de moyens pour régler les coefficients $\hat{h}_i$ par récurrences successives à la fréquence d'échantillonnage $1/T$, selon la formule de récurrence:

$$\hat{h}_i(n+1) = \hat{h}_i(n) + e_n \frac{\Delta F_{n-i}}{p+1},$$

$i$ entier allant de 0 à $p$, $pT$ étant la durée de la réponse impulsionnelle du trajet d'écho,

$\hat{h}_i(n)$ étant les coefficients du filtre à modifier à un instant $nT$,

$\hat{h}_i(n+1)$ étant les coefficients du filtre modifiés et utilisables à l'instant $(n+1)T$,

$e_n$ étant la valeur du signal fourni par le circuit de soustraction à l'instant $nT$,

$\Delta F_{n-i}$ étant les valeurs des éléments binaires du signal codé en delta, stockées dans le filtre transversal et entrées dans ce filtre aux instants $(n-i)T$.

8. Annuleur d'écho selon les revendications 5 et 7 ou 6 et 7 muni d'un codeur delta à échelon de codage variable, caractérisé en ce que le circuit de réglage des coefficients du filtre transversal est en outre muni de moyens de multiplication pour multiplier les coefficients formés selon la formule de récurrence précitée, par

$$\left[ \frac{\delta f_{n-i+1}}{\delta f_{n-i}} \cdot \frac{\delta f_n}{\delta f_{n+1}} \right],$$

$\delta f_n$, $\delta f_{n+1}$, $\delta f_{n-i}$, $\delta f_{n-i+1}$ étant les valeurs de l'échelon de codage respectivement aux instants $nT$, $(n+1)T$, $(n-i)T$, $(n-i+1)T$, les coefficients $\hat{h}_i(n+1)$ résultant de cette multiplication étant les coefficients modifiés, utilisables à l'instant $(n+1)T$.

9. Annuleur d'écho selon la revendication 8, caractérisé en ce que, pour simplifier le réglage des coefficients dans le circuit de réglage, les rapports

$$R_i = \frac{\delta f_{n-i+1}}{\delta f_{n-i}}$$

sont codés de telle façon que:
$R_i = 1 + K \cdot 2^{-x}$
avec $\quad K=0$ si $1-2^{-x} \leqslant \quad R_i \leqslant 1 + 2^{-x}$
$\qquad\quad K=1$ si $\qquad\qquad R_i > 1 + 2^{-x}$
$\qquad\quad K=-1$ si $\qquad\qquad R_i < 1 - 2^{-x}$
$x$ entier étant suffisamment grand pour que $2^{-x}$ soit petit vis à vis de 1, le rapport

$$\frac{\delta f_n}{\delta f_{n+1}}$$

étant codé de la même manière.

10. Annuleur d'écho selon l'une des revendications 8 ou 9, caractérisé en ce qu'il comporte une mémoire (43) pour stocker les $p+1$ valeurs du rapport

$$\frac{\delta f_{n-i+1}}{\delta f_{n-i}}$$

et la valeur du rapport

$$\frac{\delta f_n}{\delta f_{n+1}}$$

et des moyens de multiplication (44) pour multiplier pendant chaque période d'échantillonnage $T$, les $p+1$ coefficients, formés selon la formule de récurrence précitée par les rapports correspondants

$$\frac{\delta f_{n-i+1}}{\delta f_{n-i}} \text{ et par le rapport } \frac{\delta f_n}{\delta f_{n+1}}.$$

11. Annuleur d'écho selon l'une des revendication 8 à 10, caractérisé en ce que les valeurs de l'échelon de codage sont codées en MIC pour être utilisées dans le décodeur local présent dans le codeur, dans le circuit de réglage des coefficients et dans lesdits circuits pour multiplier et diviser par l'échelon de codage.

12. Annuleur d'écho selon l'une des revendications 1 à 4, caractérisé en ce que le circuit de réglage (12) des coefficients du filtre transversal est muni de moyens pour calculer les coefficients $\hat{h}_i$ du filtre selon l'expression:

$$h_i = \frac{1}{q+1} \sum_{j=0}^{q} d_{n-j} \cdot \Delta F_{n-j-i},$$

q étant un nombre entier tel que $q < p$,

$d_{n-j}$ étant les valeurs du signal d'écart fourni par le circuit formeur de différence aux instants $(n-j)T$,

$\Delta F_{n-j-i}$ étant les valeurs des éléments binaires du signal codé en delta, stockées dans le filtre et entrées dans le filtre aux instants $(n-j-i)T$.

13. Annuleur d'écho selon la revendication 12, caractérisé en ce que les éléments binaires du signal codé en delta sont appliqués à la mémoire du filtre transversal (10) par l'intermédiaire d'un circuit (50) de retard qT, cette mémoire étant formée de $(r+1)$ registres à décalage (51-0 à 51-r), décalés à la fréquence d'échantillonnage 1/T, r entier étant tel que $(p+1)=(r+1)(q+1)$, le circuit de réglage (12) des coefficients comportant une mémoire (52) pour stocker lesdites valeurs de signal $d_{n-j}$ pendant la totalité d'une période de calcul s'étendant de l'instant nT à l'instant $(n+q)T$, le circuit de réglage (12) comportant $(r+1)$ organes de calcul (54-0 à 54-r) dont les entrées sont connectées d'une part respectivement auxdits $(r+1)$ registres à décalage (51-0 à 51-r) et d'autre part à ladite mémoire (52) pour les valeurs de signal $d_{n-j}$, ces organes de calcul étant agencés pour former chacun à chaque instant d'échantillonnage de la période de calcul le produit de convolution des valeurs de signal $d_{n-j}$ et des valeurs des éléments binaires stockées à cet instant dans le registre à décalage correspondant, les produits de convolution formés par les organes de calcul étant multipliés (55-0 à 55-r) par $1/(q+1)$ pour constituer les coefficients calculés du filtre transversal, les coefficients calculés fournis successivement pendant la période de calcul et provenant respectivement du premier, du deuxième et du dernier organes de calcul étant respectivement $\hat{h}_q$ à $\hat{h}_0$, $\hat{h}_{2q+1}$ à $\hat{h}_{q+1}$ et $\hat{h}_p$ à $\hat{h}_{p-q}$.

14. Annuleur d'écho selon l'une des revendications 12 ou 13, muni d'un codeur delta à échelon variable, caractérisé en ce que q est en outre choisi de façon que pendant l'intervalle de temps qT l'échelon de codage puisse être considéré comme substantiellement fixe et en ce que le circuit de réglage des coefficients est en outre muni de moyens de multiplication (47) pour multiplier les coefficients calculés selon l'expression précitée par

$$\frac{\delta f_n}{\delta f_{n-i}},$$

$\delta f_n$ et $\delta f_{n-i}$ étant les valeurs de l'échelon de codage respectivement aux instants nT et $(n-i)T$, les coefficients $\hat{h}_i$ résultant de cette multiplication étant les coefficients utilisables.

15. Annuleur d'écho selon la revendication 14, caractérisé en ce qu'il comporte une mémoire pour stocker les p+1 valeurs du rapport

$$\frac{\delta f_n}{\delta f_{n-i}}$$

et des moyens de multiplication pour multiplier les p+1 coefficients formés pendant la période de calcul par les rapports correspondants

$$\frac{\delta f_n}{\delta f_{n-i}}.$$

16. Annuleur d'écho selon l'une des revendications 1 à 7 ou l'une des revendications 12 et 13, utilisé pour supprimer le couplage acoustique entre un haut-parleur (4) et un microphone (5), caractérisé en ce que la voie réception est munie avant le codeur delta (14) d'un dispositif de régulation de dynamique (60), le codeur delta est du type à échelon de codage fixe et à la sortie de la voie réception est inséré un amplificateur à gain réglable (61).

## Patentansprüche

1. Echokompensator zum Kompensieren eines in einer Sendestrecke (7) erzeugten Echosignals mit Hilfe eines einer Empfangsstrecke (1) zugeführten Signals, wobei dieser Echokompensator einen Subtrahierkreis (9) aufweist, der an seiner ersten Eingangsklemme ein von dem in die Sendestrecke (7) eintretenden Signal abgeleitetes Signal und an der zweiten Eingangsklemme das Ausgangssignal eines Transversalfilters (10) erhält, das an sich ein Signal erhält, das von dem der Empfangsstrecke (1) zugeführten Signal abgeleitet ist, und wobei dieses Filter mit einer Regelanordnung (12) zum Regeln der Filterkoeffizienten versehen ist, und zwar zum Kompensieren des durch das Echosignal verursachten Anteils in dem Ausgangssignal des Subtrahierkreises (9), dadurch gekennzeichnet, dass der Kompensator die folgenden Elemente aufweist:

— einen Deltakodierer (14) zum mit der Abtastfrequenz 1/T Deltakodieren des der Empfangsstrecke (1) zugeführten Signals und zum dem Eingang des Transversalfilters (10) Zuführen der Bits des deltakodierten Signals,

— eine Differenzerzeugungsschaltung (22) zum mit der Abtastfrequenz 1/T Erzeugen des Differenzsignals zwischen den Werten zweier aufeinanderfolgender Abtastwerte des in die Sendestrecke (7) eintretenden Signals und zum Zuführen dieses Differenzsignals zu der ersten Eingangsklemme des Subtrahierkreises (9), sowie

— einen Integrierkreis (13) zum Integrieren des Ausgangssignals des Subtrahierkreises (9) und zum Zuführen des integrierten Signals zu der Ausgangsklemme (8) der Sendestrecke (7).

2. Echokompensator nach Anspruch 1, dadurch gekennzeichnet, dass das die Empfangsstrecke (1) verlassende Signal durch Dekodierung des deltakodierten Signals gebildet ist.

3. Echokompensator nach Anspruch 2, dadurch gekennzeichnet, dass das die Empfangsstrecke verlassende Signal von dem Ortsdekoder (19) in dem Deltakodierer (14) geliefert wird.

4. Echokompensator nach einem der Ansprüche 2 und 3, dadurch gekennzeichnet, dass das die Empfangsstrecke (1) verlassende Signal einem Filter (21) zugeführt wird, das diejenigen Frequenzen abschneidet, die höher sind als die obere Frequenz des der Empfangsstrecke zugeführten Signalbandes.

5. Echokompensator nach einem der Ansprüche 1 bis 4, dadurch gekennzeichnet, dass er eine Schaltungsanordnung aufweist zum Teilen des von der Differenzerzeugungsschaltung (22) gelieferten Differenzsignals durch den in dem Deltakodierer angewandten Kodierschritt (25) und zum der ersten Eingangsklemme des Subtrahierkreises (9) Zuführen des geteilten Signals, sowie eine Schaltungsanordnung (26) zum Multiplizieren des Ausgangssignals des Subtrahierkreises mit dem genannten Kodierschritt und zum dem Eingang des Integrierkreises (13) Zuführen des multiplizierten Signals.

6. Echokompensator nach einem der Ansprüche 1 bis 4, dadurch gekennzeichnet, dass er eine Schaltungsanordnung (27) aufweist zum Multiplizieren des Ausgangssignals des Transversalfilters mit dem in dem Signalkodierer angewandten Kodierschritt und zum der zweiten Eingangsklemme des Subtrahierkreises (9) Zuführen des multiplizierten Signals.

7. Echokompensator nach einem der Ansprüche 1 bis 6, dadurch gekennzeichnet, dass die Regelschaltung (12) zur Regelung der Filterkoeffizienten des Transversalfilters mit Mitteln versehen ist zum Regeln der Koeffizienten $\hat{h}_i$ durch aufeinanderfolgende Iterationen mit der Abtastfrequenz $1/T$, entsprechend der folgenden Iterationsformel:

$$\hat{h}_i(n+1) = \hat{h}_i(n) + e_n \frac{\Delta F_{n-i}}{p+1} \quad ,$$

wobei

$i$ eine ganze Zahl zwischen 0 und $p$ ist, $pT$ die Dauer der Impulsstossantwort der Echostrecke ist, wobei

$\hat{h}_i(n)$ die zu einem Zeitpunkt $nT$ zu ändernden Filterkoeffizienten sind,

$\hat{h}_i(n+1)$ die geänderten und zu dem Zeitpunkt $(n+1)T$ zu verwendenden Filterkoeffizienten sind,

$e_n$ der Wert des zu dem Zeitpunkt $nT$ von dem Subtrahierkreis gelieferten Signals ist,

$\Delta F_{n-i}$ die in dem Transversalfilter gespeicherten und zu den Zeitpunkten $(n-i)T$ in das Filter eingeführten Werte der Bits des deltakodierten Signals sind.

8. Echokompensator nach den Ansprüchen 5 und 7 oder 6 und 7 mit einem Deltakodierer mit veränderlichem Kodierschritt, dadurch gekennzeichnet, dass die Regelschaltung zur Regelung der Filterkoeffizienten des Transversalfilters ausserdem mit Multipliziermitteln versehen ist zum Multiplizieren der entsprechend der genannten Iterationsformel gebildeten Koeffizienten mit

$$\left[ \frac{\delta f_{n-i+1}}{\delta f_{n-i}} \cdot \frac{\delta f_n}{\delta f_{n+1}} \right] ,$$

wobei $\delta F_n$, $\delta f_{n+1}$, $\delta f_{n-i}$, $\delta f_{n-i+1}$ die Werte der betreffenden Kodierschritte zu den Zeitpunkten $nT$, $(n+1)T$, $(n-i)T$ bzw. $(n-i+1)T$ sind, wobei die durch die Multiplikation erhaltenen Koeffizienten $\hat{h}_i(n+1)$ die zu dem Zeitpunkt $(n+1)T$ verwendbaren geänderten Koeffizienten sind.

9. Echokompensator nach Anspruch 8, dadurch gekennzeichnet, dass zum Vereinfachen der Regelung der Koeffizienten in der Regelschaltung die Verhältnisse

$$R_i = \frac{\delta f_{n-i+1}}{\delta f_{n-i}}$$

derart kodiert sind, dass:
$R_i = 1 + K \cdot 2^{-x}$
mit K = 0 wenn $1-2^{-x} \leqslant$ $R_i \leqslant 1+2^{-x}$
K = 1 wenn $R_i > 1+2^{-x}$
K = −1 wenn $R_i < 1-2^{-x}$
wobei $x$ eine ganze Zahl ist, die ausreicht damit $2^{-x}$ in bezug auf 1 klein ist, wobei das Verhältnis

$$\frac{\delta f_n}{\delta f_{n+1}}$$

auf dieselbe Art und Weise kodiert ist.

10. Echokompensator nach einem der Ansprüche 8 oder 9, dadurch gekennzeichnet, dass er einen Speicher (43) zum Speichern der $p+1$ Werte des Verhältnisses

$$\frac{\delta f_{n-i+1}}{\delta f_{n-i}}$$

und des Wertes des Verhältnisses

$$\frac{\delta f_n}{\delta f_{n+1}}$$

sowie Multipliziermittel (44) aufweist zum während jeder Abtastperiode $T$ Multiplizieren der $p+1$ entsprechend der genannten Iterationsformel gebildeten Koeffizienten mit den entsprechenden Verhältnissen

$$\frac{\delta f_{n-i+1}}{\delta f_{n-i}} \quad \text{bzw. dem Verhältnis} \quad \frac{\delta f_n}{\delta f_{n+1}} .$$

11. Echokompensator nach einem der Ansprüche 8 bis 10, dadurch gekennzeichnet, dass die Werte des Kodierschrittes zum Gebrauch in dem Ortsdekoder in dem Kodierer, in der Regelschaltung zur Regelung der Koeffizienten und in den Kreisen zum Multiplizieren und Dividieren mit dem bzw. durch den Kodierschritt PCM-kodiert sind.

12. Echokompensator nach einem der Ansprüche 1 bis 4, dadurch gekennzeichnet, dass die Regelschatlung (12) zur Regelung der Koeffizienten des Transversalfilters mit Mitteln versehen ist zum Berechnen der Koeffizienten $\hat{h}_i$ des Filters entsprechend dem folgenden Ausdruck:

$$h_i = \frac{1}{q+1} \sum_{j=0}^{q} d_{n-j} \cdot \Delta F_{n-j-i},$$

wobei:

q eine ganze Zahl ist, so dass $q < p$ ist,

$d_{n-j}$ die Werte des von der differenzerzeugenden Schaltungsanordnung zu den Zeitpunkten $(n-j)T$ gelieferten Differenzsignals darstellt,

$\Delta F_{n-j-i}$ die Werte der in dem Filter gespeicherten und zu den Zeitpunkten $(n-j-i)T$ in das Filter eingeführten Bits des deltakodierten Signals darstellt.

13. Echokompensator nach Anspruch 12, dadurch gekennzeichnet, dass die Bits des deltakodierten Signals mittels einer Verzögerungsschaltung (50) qT dem Speicher des Transversalfilters (10) zugeführt werden, wobei dieser Speicher aus $(r+1)$ Schieberegistern (51-0 bis 51-r) besteht, wobei die Verschiebung mit der Abtastfrequenz $1/T$ erfolgt, wobei r eine ganze Zahl ist, so dass $(p=1) = (r+1)(q+1)$ ist, wobei die Regelschaltung (12) zur Regelung der Koeffizienten einen Speicher (52) aufweist zum Speichern der Werte des Signals $d_{n-j}$ während der ganzen Berechnungsperiode, die sich von dem Zeitpunkt nT bis zu dem Zeitpunkt $(n+q)T$ erstreckt, wobei die Regelschaltung (12) $(r+1)$ Rechenelemente (54-0 bis 54-r) aufweist, deren Eingänge einerseits mit den $(r+1)$ Schieberegistern (51-0 bis 51-r) und andererseits mit dem Speicher (52) für die Werte des Signals $d_{n-j}$ verbunden sind, wobei die Rechenelemente derart angeordnet sind, dass sie je zu jedem Abtastzeitpunkt der Rechenperiode das Faltungsprodukt der Werte des Signals $d_{n-j}$ und der Werte der zu diesem Zeitpunkt in dem betreffenden Schieberegister gespeicherten Bits bilden, wobei die durch die Rechenelemente gebildeten Faltungsprodukte mit $1/(q+1)$ (55-0 bis 55-r) multipliziert werden, und zwar zu Ermitteln der berechneten Koeffizieten des Transversalfilters, die während der Rechenperiode nacheinander geliefert werden und von dem ersten, zweiten und letzten Rechenelement, d.h. $\hat{h}_q$ bis $\hat{h}_0$, $\hat{h}_{2q+1}$ bis $\hat{h}_{q+1}$ bzw. $\hat{h}_p$ bis $\hat{h}_{p-q}$ herrühren.

14. Echokompensator nach einem der Ansprüche 12 oder 13 mit einem Deltakodierer mit veränderlichem Kodierschritt, dadurch gekennzeichnet, dass q ausserdem derart gewählt worden ist, dass während des Zeitintervalls qT der Kodierschritt als nahezu fest betrachtet werden kann und dass die Regelschaltung zur Regelung der Koeffizienten ausserdem mit Multipliziermitteln (47) versehen ist zum entsprechend dem obenstehenden Ausdruck Multiplizieren der berechneten Koeffizienten mit

$$\frac{\delta f_n}{\delta f_{n-i}},$$

wobei $\delta f_n$ und $\delta f_{n-i}$ die Werte des Kodierschrittes zu den Zeitpunkten nT bzw. $(n-i)T$ sind, wobei die aus dieser Multiplikation herrührenden Koeffizienten $\hat{h}_i$ die verwendbaren Koeffizienten sind.

15. Echokompensator nach Anspruch 14, dadurch gekennzeichnet, dass er einen Speicher zum Speichern der p+1 Werte des Verhältnisses

$$\frac{\delta f_n}{\delta f_{n-i}}$$

und Multipliziermittel zum Multiplizieren der p+1 während der Rechenperiode durch die betreffenden Verhältnisse

$$\frac{\delta f_n}{\delta f_{n-i}}.$$

gebildeten Koeffizienten aufweist.

16. Echokompensator nach einem der Ansprüche 1 bis 7 oder nach einem der Ansprüche 12 und 13, der dazu verwendet wird, die akustische Kopplung zwischen einem Lautsprecher (4) und einem Mikrophon (5) zu unterdrücken, dadurch gekennzeichnet, dass die Empfangsstrecke vor dem Deltakodierer (14) mit einem Dynamikregler (60) versehen ist, wobei der Deltakodierer von dem Typ mit einem festen Kodierschritt ist und dass am Ausgang der Empfangsstrecke ein Verstärker (61) mit regelbarer Verstärkung vorgesehen ist.

**Claims**

1. Echo canceller for cancelling an echo signal generated in a transmission channel (7) by a signal applied to a receive channel (1), said echo canceller comprising a subtraction circuit (9) receiving at its first input terminal a signal derived from the signal entering the transmission channel (7) and its second input terminal the output signal from a transversal filter (10) receiving a signal derived from the signal applied to the receive channel (1), and provided with means (12) for adjusting the filter coefficients so as to cancel the component due to the echo signal in the output signal of the subtraction circuit (9), characterized in that the echo canceller comprises:

– a delta encoder (14) for encoding, at the sampling rate $1/T$, the signal applied to the receive channel (1) and for supplying to the input of the transversal filter (10) the bits of the delta-encoded signal,

– a difference-forming circuit (22) for forming, at the sampling rate $1/T$, the difference signal between the values of two consecutive samples of the signal entering the transmission channel (7) and for supplying this difference signal to the first input of the subtraction circuit (9), and

    &minus; an integrating circuit (13) for integrating the output signal of the subtraction circuit (9) and for applying the integrated signal to the output terminal (8) of the transmission channel (7).

    2. Echo canceller as claimed in Claim 1, characterized in that the signal leaving the receive channel (1) is formed by decoding the delta-encoded signal.

    3. Echo canceller as claimed in Claim 2, characterized in that the signal leaving the receive channel is supplied by the local decoder (19) present in the delta encoder (14).

    4. Echo canceller as claimed in any one of Claims 2 and 3, characterized in that the signal leaving the receive channel (1) is applied to a filter (21) which cuts off the frequencies higher than the upper frequency of the signal band applied to the receive channel.

    5. Echo canceller as claimed in any one of Claims 1 to 4, characterized in that it comprises a circuit for dividing by the encoding step (25) used in the delta encoder the difference signal supplied by the difference-forming circuit (22) and applying the divided signal to the first input of the subtraction circuit (9) and a circuit (26) for multiplying by said encoding step the signal leaving the subtraction circuit and for applying the multiplied signal to the input of said integrating circuit (13).

    6. Echo canceller as claimed in any one of Claims 1 to 4, characterized in that it comprises a circuit (27) for multiplying by the encoding step used in the encoder the signal leaving the transversal filter and applying the multiplied signal to the second input of the subtraction circuit (9).

    7. Echo canceller as claimed in any one of Claims 1 to 6, characterized in that the coefficient adjusting circuit (12) of the transversal filter is provided with means for interatively adjusting the coefficients $\hat{h}_i$ at said sampling rate $1/T$, in accordance with the iteration formula:

$$\hat{h}_i(n+1) = \hat{h}_i(n) + e_n \frac{\Delta F_{n-i}}{p+1} \quad ,$$

where

    i is an integer going from 0 to p, pT is the duration of the impulse response of the echo path,

    $\hat{h}_i(n)$ are the filter coefficients to be adjusted at an instant nT,

    $\hat{h}_i(n+1)$ are the adjusted filter coefficients that can be used at the instant $(n+1)T$, $e_n$ is the value of the signal supplied by the subtraction circuit at the instant nT, and

    $\Delta F_{n-i}$ are the bit values of the delta-encoded signal, stored in the transversal filter and introduced into this filter at the instants $(n-i)T$.

    8. Echo canceller as claimed in Claims 5 and 7 or 6 and 7 comprising a delta encoder of variable encoding step, characterized in that the coefficient adjusting circuit of the transversal filter is in addition provided with arithmetical elements for multiplying the coefficients, formed in accordance with the said iteration formula, by

$$\left[ \frac{\delta f_{n-i+1}}{\delta f_{n-i}} \cdot \frac{\delta f_n}{\delta f_{n+1}} \right] ,$$

where $\delta f_n$, $\delta f_{n+1}$, $\delta f_{n-i}$ $\delta f_{n-i+1}$ are the values of he respective encoding steps at the instants nT, $(n+1)T$, $n(-i)T$, $(n-i+1)T$ and the coefficients $\hat{h}_i(n+1)$ resulting from this multiplication are the adjusted coefficients that can be used at the instant $(n+1)T$.

    9. Echo canceller as claimed in Claim 8, characterized in that, for simplifying the adjustment of the coefficients in the adjusting circuit, the ratios

$$R_i = \frac{\delta f_{n-i+1}}{\delta f_{n-i}}$$

are encoded such that:

$R_i = 1 + K \cdot 2^{-x}$
with   $K=0$ if $1-2^{-x} \leqslant$     $R_i \leqslant 1+2^{-x}$
         $K=1$ if              $R_i > 1+2^{-x}$
         $K=-1$ if            $R_i < 1-2^{-x}$
x being an integer sufficiently large for $2^{-x}$ to be small with respect to 1, the ratio

$$\frac{\delta f_n}{\delta f_{n+1}}$$

being encoded in the same manner.

    10. Echo canceller as claimed in either one of Claims 8 or 9, characterized in that it comprises a memory (43) for storing the p+1 values of the ratio

$$\frac{\delta f_{n-i+1}}{\delta f_{n-i}}$$

and the value of the ratio

$$\frac{\delta f_n}{\delta f_{n+1}}$$

arithmetical elements (44) for multiplying during each sampling period T the p+1 coefficients formed in accordance with the said iteration formula by the corresponding ratios

$$\frac{\delta f_{n-i+1}}{\delta f_{n-i}} \quad \text{and by the ratio} \quad \frac{\delta f_n}{\delta f_{n+1}} .$$

    11. Echo canceller as claimed in an one of Claims 8 to 10, characterized in that the values of the encoding step are PCM-encoded in order to be used in the local decoder present in the encoder, in the coefficient adjusting circuit and in the said circuits for multiplication and division by the encoding step.

12. Echo canceller as claimed in any one of Claims 1 to 4, characterized in that the coefficient adjusting circuit (12) of the transversal filter is provided with means for calculating the coefficients $\hat{h}_i$ of the filter in accordance with the expression:

$$h_i = \frac{1}{q+1} \sum_{j=0}^{q} d_{n-j} \cdot \Delta F_{n-j-i} \, ,$$

where

q is an integer such that $q < p$,

$d_{n-j}$ are the values of the difference signal supplied by the difference-forming circuit at the instants $(n-j)T$, and

$\Delta F_{n-j-i}$ are the bit values of the delta-encoded signal stored in the filter and introduced into the filter at the instants $(n-j-i)T$.

13. Echo canceller as claimed in Claim 12, characterized in that the bits of the delta-encoded signal are applied to the memory of the tranversal filter (10) through a delay circuit qT (50), said memory being formed by $(r+1)$ shift registers (51-0 to 51-r), shifted at the sampling rate $1/T$, r being an integer such that $(p+1) = (r+1)(q+1)$, the coefficient adjusting circuit comprising a memory (52) for storing the said values of the signal $d_{n-j}$ during the entire period of calculation extending from the instant nT to the instant $(n+q)T$, the coefficient adjusting circuit (12) comprising $(r+1$ arithmetical elements (54-0 to 54-r) whose inputs are connected on the one hand to said $(r+1)$ shift registers (51-0 to 51-r), respectively, and on the other to said memory (52) for the values of the signal $d_{n-j}$, these arithmetical elements being arranged so that each will form the convolution product of the signal values $d_{n-j}$ and the bit values stored at that instant in the corresponding shift register at each sampling instant in the calculation period, the convolution products formed by the arithmetical elements (55-0 to 55-r) being multiplied by $1/(q+1)$ in order to constitute the calculated coefficients of the transversal filter, the calculated coefficients successively supplied during the calculation period and originating respectively from the first, the second and the last arithmetical element being respectively $\hat{h}_q$ to $\hat{h}_0$, $\hat{h}_{2q+1}$ to $\hat{h}_{q+1}$ and $\hat{h}_p$ to $\hat{h}_{p-q}$.

14. Echo canceller as claimed in either one of Claims 12 or 13, comprising a delta encoder of variable encoding step, characterized in that q is in addition chosen such that during the time interval qT the encoding step may be considered to be substantially fixed and in that the coefficient adjusting circuit also comprises arithmetical means (47) for multiplying the coefficients calculated in accordance with the foregoing expression by

$$\frac{\delta f_n}{\delta f_{n-i}} \, ,$$

where $\delta f_n$ and $\delta f_{n-i}$ are the values of the encoding step at the respective instants nT and $(n-i)T$, whilst the coefficients $\hat{h}_i$ resulting from this multiplication are the coefficients that can be used.

15. Echo canceller as claimed in Claim 14, characterized in that it comprises a memory for storing the $p+1$ values of the ratio

$$\frac{\delta f_n}{\delta f_{n-i}}$$

and arithmetical elements for multiplying the $p+1$ coefficients formed during the calculation period by the corresponding ratios

$$\frac{\delta f_n}{\delta f_{n-i}} \, .$$

16. Echo canceller as claimed in any one of Claims 1 to 7 or either one of Claims 12 and 13, used for suppressing the acoustic coupling between a loudspeaker (4) and a microphone (5), characterized in that in the receive channel a device for controlling the dynamic range (60) is inserted before the delta encoder (14), the delta encoder being of the fixed-step encoding type, and a variable-gain amplifier is inserted at the output of the receive channel.

FIG.1

FIG.2

2/5

FIG.3

FIG.4

3/5

FIG.5

FIG.6

EP 0 174 678 B1

4/5

27

FIG.7

EP 0 174 678 B1